(19) Europäisches Patentamt

European Patent Office

Office européen des brevets

(11) **EP 0 995 323 B1**

(12) **EUROPEAN PATENT SPECIFICATION**

(45) Date of publication and mention
of the grant of the patent:
**08.02.2006 Bulletin 2006/06**

(51) Int Cl.:
***H04Q 7/22*** (2006.01)

(21) Application number: **98919747.0**

(22) Date of filing: **07.04.1998**

(86) International application number:
**PCT/US1998/007301**

(87) International publication number:
**WO 1998/046035 (15.10.1998 Gazette 1998/41)**

(54) **DETERMINING THE LOCATION OF A SUBSCRIBER UNIT IN A MOBILE COMMUNICATION SYSTEM**

BESTIMMUNG DES STANDORTES EINER TEILNEHMEREINHEIT IN EINEM MOBILEN KOMMUNIKATIONSSYSTEM

DETERMINATION DE LA POSITION D'UNE UNITE D'ABONNE DANS UN SYSTEME DE COMMUNICATION MOBILE

(84) Designated Contracting States:
**AT BE CH DE DK ES FI FR GB GR IE IT LI LU MC NL PT SE**

(30) Priority: **10.04.1997 US 838775**
**10.04.1997 US 838776**

(43) Date of publication of application:
**26.04.2000 Bulletin 2000/17**

(73) Proprietor: **QUALCOMM INCORPORATED**
**San Diego, California 92121-1714 (US)**

(72) Inventors:
• **AGRE, Daniel, H.**
**San Diego, CA 92131 (US)**
• **SPARTZ, Michael, K.**
**San Marcos, CA 92069 (US)**
• **CONSTANDSE, Rodger, M.**
**San Diego, CA 92111 (US)**

(74) Representative: **Wagner, Karl H. et al**
**WAGNER & GEYER**
**Patentanwälte**
**Gewürzmühlstrasse 5**
**80538 München (DE)**

(56) References cited:
| EP-A- 0 526 832 | WO-A-90/13211 |
| WO-A-94/29995 | WO-A-95/14343 |
| WO-A-96/19908 | WO-A-96/37061 |
| WO-A-97/21296 | GB-A- 2 289 191 |

Description

## BACKGROUND OF THE INVENTION

### I. Field of the Invention

The invention generally relates to determining the location of a subscriber unit in a mobile communication system. More specifically the invention relates to a method of, and apparatus for, performing position-based call processing in a mobile telephone system using multiple location mapping schemes.

### II. Description of the Related Art

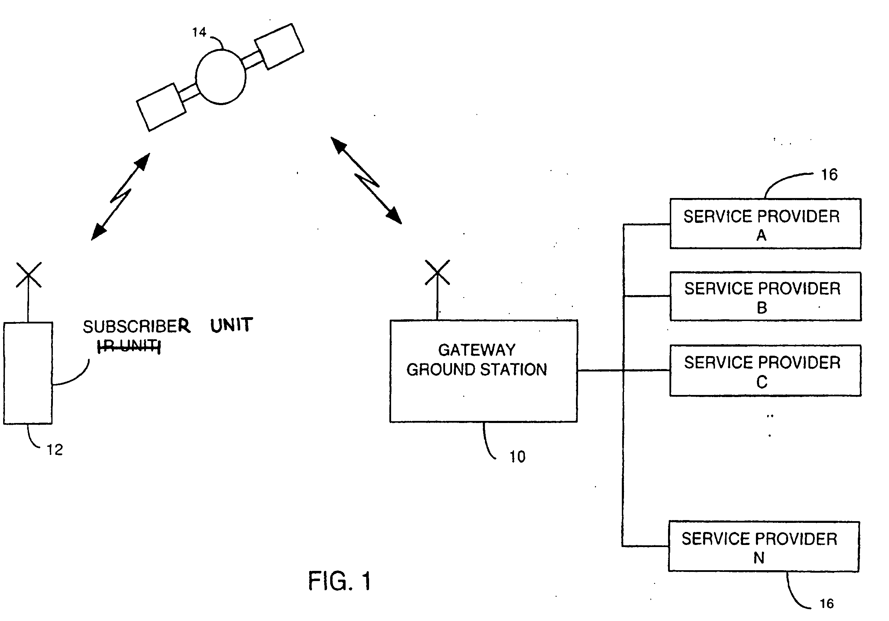

Satellite-based mobile telecommunications systems are being developed that allow a mobile communications subscriber unit such as a mobile telephone to be used almost anywhere in the world. In one system, illustrated in **FIG. 1**, a fleet of low earth orbit satellites are used along with a set of ground base stations **10** called "gateways". Signals are transmitted from a subscriber unit **12** to satellites **14** (shown as a single satellite for ease of drawing), then relayed down to gateway **10** for routing to one of a set of local service providers, generally denoted **16**, which provide an interconnection to local land line telephone networks such as a local Public Switched Telephone Network (PSTN) or to other communication networks operated by the service provider. Depending upon the nature of the communication, the signals are ultimately routed to, for example, a telephone connected to the land line network, or to a mobile telephone perhaps operating in another part of the world covered by a different gateway, or perhaps to a computer system. The signals may encode voice communications such as telephone conversations or data communications such as, for example, facsimile transmissions, Internet connection signals, etc. The subscriber unit **12** may be a hand-held mobile telephone, a mobile telephone mounted in a boat, train or airplane, a laptop computer, a personal data assistant or any other suitable communications unit provided with the proper equipment for communicating with the gateway via the satellite constellation.

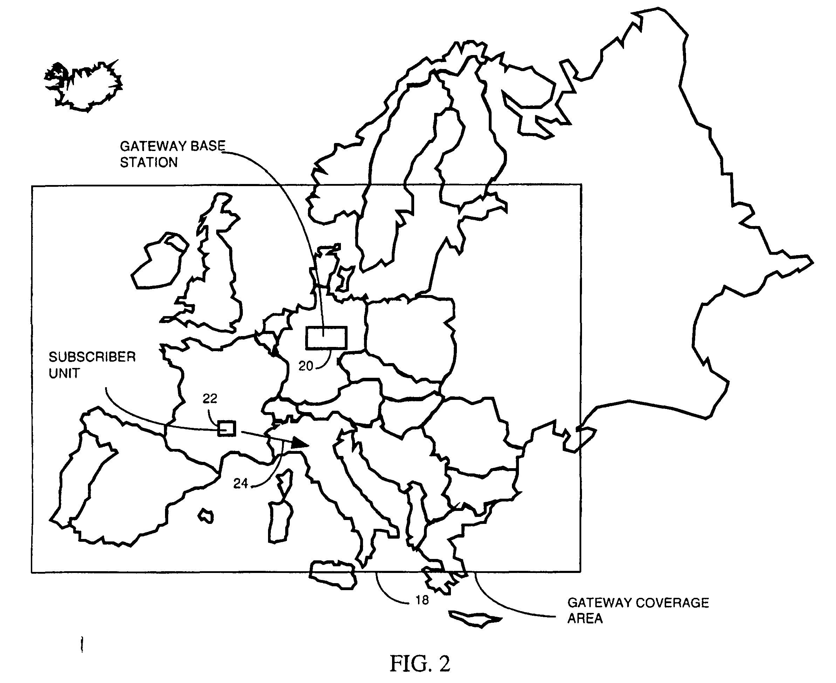

A single gateway may handle all telecommunications traffic within an area covering as much as 2000 by 3000 kilometers. **FIG. 2** illustrates an exemplary coverage area **18** for a gateway **20** operating in Europe. As can be seen, the coverage area encompasses many countries. Each country typically has one or more service providers. Depending upon the implementation, each service provider may operate only within one country or perhaps only within a portion of one country. Such restrictions may result from physical limitations on the capability of the service provider system or from contractual or other legal constraints. For example, even though operationally capable of doing so, a service provider in France may not be contractually and/or legally allowed to handle mobile communications for a subscriber unit operating in Italy and vice versa. Hence, for subscriber units in France (such as exemplary unit **22**), the gateway may need to route communications through a French service provider such as TE.SA.M.; whereas, for subscriber units in Italy, the gateway may need to route communications through an Italian service provider such as Finmeccanica. Further, as represented by arrow **24**, subscriber units may move from one country to another. Even within a single country, the gateway may need to selectively route communications to different service providers depending upon the location of the subscriber unit within the country. Moreover, the operator of the subscriber unit may be contractually obligated to use certain service providers in certain locations, or may be subject to other legal constraints. In addition to any contractual limitations that may prevent telephone connections from the subscriber unit from being connected to particular service providers, the user of the subscriber unit may simply have certain preferences regarding which service provider to employ.

For these and other reasons, it may be desirable for the gateway to be able to reliably coordinate access among numerous service providers and among numerous mobile telephone users over a large geographical area. Previously, no adequate system has been developed for that purpose, particularly one which takes into account user preferences.

Problems also occur when subscriber units are taken from one geographical area to another such as from one country to another or from one area code region to another. For example, as typically implemented, the user of a subscriber unit is required to dial a long distance area code prefix to dial any telephone number, even if the user has carried the subscriber unit into the area code region of the number being called. Hence, even though the user is calling a telephone number that is a local telephone number in the region in which the user is currently located, the user is nevertheless required to dial the number as if it were a long distance call, complete with area code. Likewise, the user is typically required to dial both an international calling code and an area code prefix to dial any telephone number not in the home country of the user, even if the user has carried the subscriber unit into the country of the number being called. Such is particularly problematic for users operating subscriber units in portions of the world such as Europe wherein the user may frequently need to carry the subscriber unit from one country to another.

Occasionally, the user may forget these dialing restrictions and may dial a telephone number without the area code or international dialing code number expecting to be connected to a local number and instead, depending upon the implementation, being erroneously connected to the corresponding local number in the home area code or perhaps even in the home country of the user. Such can be a particularly significant problem if the local number being dialed is an emergency services telephone number such as "911" or a direct police, fire, or ambulance number. Indeed, in emergency situations the user is less likely to remember any dialing restrictions. Also, some subscriber units are provided with a special emergency telephone number button which automatically dials an emergency services number. Again, depending upon the implementation, the emergency number dialed may be that of an emergency services center back in the home area code or perhaps the home country of the user, rather than the intended local emergency services center. Operators of the telephone system may even be deemed liable for injuries or damages that might otherwise have been avoided if the emergency services telephone number had been directed to a local emergency services center.

Problems can also arise in connection with the need of a law enforcement agency to intercept or monitor telephone calls to or from certain subscriber units. The jurisdiction of the law enforcement agency to take such action may depend upon the location of the subscriber unitparticularly upon the county, state or country in which the subscriber unit is located. For example, the law enforcement agencies of a particular country may be allowed to intercept telephone calls to or from a subscriber unit while located within their borders but not within other countries borders. For satellite-based systems, wherein the subscriber unit may be taken from one country to another, it may no longer be certain whether the law enforcement agency has proper jurisdiction to intercept telephone calls to or from the subscriber unit.

For these and other reasons, it may be desirable for a gateway or other mobile communications system to be able to direct, intercept or otherwise process telephone calls to and from subscriber units based upon the location of the subscriber unit.

The mobile communications system may be implemented in accordance with the Global System for Mobile Communications (GSM) protocol. GSM, as it is currently defined, does not support position information other than location area code's (LAC's). LAC's form a portion of a 4-frame broadcast control channel (BCCH) segment of a 51-frame multiframe signaling structure. Since only four frames are employed to encode the BCCH including the LAC, very little location resolution is accommodated. For a gateway system, which may cover up to 2000 km by 3000 km, the GSM LAC is insufficient to adequately specify the location of a subscriber unit to allow, for example, for a determination of the nearest emergency services station or to allow for a determination of whether a law enforcement agency has proper jurisdiction to intercept calls placed by a subscriber unit located somewhere within the service area. In other words, if the available GSM LAC's were merely equally subdivided over the entire 2000 km by 3000 km service area, each LAC would cover too large an area to be useful for location-based call processing. Hence, there is a need to allow for a greater resolution in location specification within a GSM gateway system and aspects of the invention are drawn to that end.

Even for non-GSM systems wherein location information may be more easily accommodated, different service providers may wish to employ different internal mapping schemes for mapping physical locations of subscriber units into discrete cells. For some service providers, such internal mapping schemes may be based, for example, on conventional cellular telephone system cell layouts as defined by the locations of ground base transceiver stations (BTS's). The layout of such cellular telephone system cells is typically determined or constrained by the physical characteristics of the ground terrain including the location of mountains, buildings, etc. For a satellite mobile transmission system, such physical ground-based limitations are generally irrelevant and "virtual" cells may be defined arbitrarily without regard to the ground terrain.

It is desirable, therefore, to provide a system for mapping physical locations of subscriber units into a variety of different individual service provider cell layouts to accommodate location specification requirements or preferences of different service providers. Even if the various service providers do not have distinct internal mapping schemes and instead can all accept physical location information using a common virtual mapping scheme, the service providers may still prefer or require that communications from the gateway be in a particular unique data format and hence separate service provider cell mappings may be desirable to facilitate the different data formats. Also the different service providers may have different location-based preferences for routing emergency service calls, for intercepting calls on behalf of law enforcement or for encrypting calls.

It is also desirable to provide a system for storing and tracking location-based system information to facilitate access to such information despite the limitations of GSM and the use of different service provider location mapping schemes. Examples of location-based system information include the locations of emergency services centers or any location-based legal or other contractual limitations imposed on service providers to process calls to or from subscriber units at different locations. In this regard, it is particularly desirable to provide a system for tracking such location-based information which allows the information to be updated as needed without affecting any of the individual service provider mapping schemes.

Further attention is drawn to the prior art document WO 94 29995, which describes a communication system which permits a user remote-site transceiver operable in a cellular communication system to receive information, including telephone identification codes, associated with the geographic area in which the remote-site transceiver is located. The remote-site transceiver includes circuitry to receive signals generated by global position system satellites, thereby permitting the geographic location of the remote-site transceiver to be ascertained. The remote-site transceiver thereafter transmits signals identifying the geographic location thereof to a base station of the cellular communication system. The base station, in turn, accesses information stored in a memory associated with the geographic area in which the transceiver is located. When the stored information includes telephonic identification codes of emergency facilities associated with various areas, the telephone identification code of a most-appropriate emergency facility is provided to the transceiver, thereby permitting a telephonic communication link to be effectuated with the most-appropriate, emergency assistance facility.

In accordance with the present invention a system and a method for processing telephonic communications, as set forth in claims 1 and 20, are provided. Preferred embodiments of the invention are described in the dependent claims.

## SUMMARY OF THE INVENTION

An object of the invention is to provide an apparatus and method that addresses the above discussed problems and disadvantages.

The invention provides a mobile communication system comprising: means for receiving a telephone call connection request signal from a subscriber unit; means for determining the location of the subscriber unit; and means for interpreting the telephone call connection request signal based upon the location of the subscriber unit.

The invention also provides a method for processing mobile communications comprising: receiving a telephone call connection request signal from a subscriber unit; determining the location of the subscriber unit; and interpreting the telephone call connection request signal based upon the location of the subscriber unit.

The invention further provides a mobile communication system comprising: means for processing a mobile telephone communication to or from a subscriber unit; means for determining the location of the subscriber unit; means for determining whether law enforcement authorities have requested that telephone communications to or from the subscriber unit are to be intercepted; means for identifying whether the law enforcement authorities have proper jurisdiction to intercept a telephone communication to or from the subscriber unit based upon the location the subscriber unit; and means, responsive to an identification that law enforcement authorities do have jurisdiction, for intercepting a telephone communication to or from the subscriber.

The invention also provides a mobile communication method comprising: processing a mobile telephone communication to or from a subscriber unit; determining the location of the subscriber unit; determining whether law enforcement authorities have requested that telephone communications to or from the subscriber unit are to be intercepted; identifying whether the law enforcement authorities have proper jurisdiction to intercept a telephone communication to or from the subscriber unit based upon the location of the subscriber unit; and if so, intercepting a telephone communication to or from the subscriber.

In accordance with one embodiment of the invention, a system for processing telephonic communications to or from a subscriber unit location is provided for use with a mobile communication system having two or more separate service providers. The system includes means for mapping physical locations within the service area of the mobile communications system to a set of information cells storing location-based system information corresponding to the physical location, means for mapping physical locations within the service area of the mobile communications system to sets of virtual service provider cells with at least one separate set of virtual provider cells for each corresponding separate service provider, and means for processing communications between a subscriber unit within the service area and a service provider using the information cells and the corresponding virtual service provider cells.

In one exemplary embodiment, the information cell stores information representative of the service providers, if any, providing service to subscriber units located at the physical locations covered by the information cell. The information cell additionally stores information representative of the nearest emergency services center to the physical locations covered by the information cell as well as information representative of the jurisdiction, if any, for law enforcement authorities to intercept telephonic communications to or from subscriber units at the physical locations covered by the information cell. The information cells for the service area are all of the same size and shape and are tiled over the entire service area of the mobile communications system. Information cells corresponding to the border between service areas include pointers to data_ structures identifying the shape of the border and means are provided for identifying the service area providing service to the physical location of the subscriber unit based upon the shape of the border as represented in the data structure.

Also in the exemplary embodiment, the means for processing communications between a subscriber unit and a service provider includes means for receiving a telephone call connection request signal to or from a subscriber unit within the service area of the mobile communications system and means for determining the physical location of the subscriber unit. Means for determining the information cell corresponding to the physical location of the subscriber unit and means for determining a service provider for providing service at the physical location of the subscriber unit as identified by the information cell are also provided. Additionally, means for determining a virtual service provider cell corresponding to the physical location of the subscriber unit information cell and means for outputting a signal representative of the virtual provider cell to the corresponding service provider are included.

In this manner, the system utilizes the information cells to track and access location-based information, such as which service providers are available for processing calls from a particular subscriber unit, and uses that information to select a service provider and to, for example, coordinate lawful intercept or emergency services call routing. Information actually forwarded to the service provider identifying the location of the subscriber unit, however, is not based on the layout of the information cells but on the layout of the virtual service provider cells employed in connection with the particular service provider. By providing the location in terms of virtual service provider cells rather than the information cells, the service provider may thereby select, to at least a certain extent, its own mapping arrangement. Also, updates to information stored in connection with the information cells may be performed without affecting the interface between the mobile communication system and the external service providers. In other words, such updates are completely transparent to the service providers.

In a specific exemplary embodiment employed in connection with a GSM system employing LAC's, the virtual service provider cells for the service area of a corresponding service provider are arranged in cell groups. All of the virtual cells of a cell group are of the same size and shape and are uniformly tiled throughout the cell group. Virtual cells of different cell groups, however, may be of different sizes. A collection of cell groups has a single corresponding LAC. The virtual service provider cells are each uniquely represented by a service provider code and a virtual cell identifier code. The virtual cell identifier code is represented by a LAC and a cell identification code. Some of the cell groups overlap. The virtual service provider cells and cell groups are rectangular and the means for mapping the set of information cells to sets of virtual service provider cells includes means for storing the latitude and longitude of a corner location of each cell group, means for receiving an identification of the latitude and longitude of the subscriber unit, means for determining latitude and longitude offsets between the corner location of a selected cell group in which the subscriber unit is located and the location of the subscriber unit, and means for identifying the particular virtual cell of the selected cell group in which the subscriber unit is located based upon the latitude and longitude offsets.

In the various embodiments of the invention, the subscriber unit may be any device having wireless telephony capability such as a mobile telephone, a personal data assistant, a dedicated Internet access device, an electronic organizer and a laptop computer. The mobile communication system may process the mobile telephonic communications in accordance with any appropriate mobile telephony processing technique such as, for example, Code Division Multiple Access (CDMA). Furthermore, the telephone call connection request signal may specify any type of telephonic communication including, for example, voice communications, data communications or combined voice and data communications.

The invention may also be implemented as a method or any other appropriate type of inventive embodiment.

## BRIEF DESCRIPTION OF THE DRAWINGS

The features, objects, and advantages of the present invention will become more apparent from the detailed description set forth below of embodiments of the invention when taken in conjunction with the drawings in which like reference characters identify correspondingly throughout and wherein:

FIG. 1 is a diagram representing a satellite-based mobile telecommunications system employing a gateway ground station;

FIG. 2 is a diagram representing an exemplary coverage area for a single gateway ground station of the system of FIG. 1;

FIG. 3A and 3B together provide a flow-chart illustrating a method, in accordance with a first exemplary implementation of the invention, for selecting a service provider for a satellite-based mobile telephone system employing a gateway ground station;

FIG. 4 is a diagram representing the satellite-based mobile telephone system performing the method of FIGS. 3A and B and having means within the gateway ground station of the system for determining the location of a subscriber unit;

FIG. 5 is a diagram representing an alternative satellite-based mobile telephone system similar to that of FIG. 4 but wherein the subscriber unit includes the means for determining location;

FIG. 6 is a flowchart illustrating a method, in accordance with a second exemplary implementation of the invention, for interpreting a dialed telephone number received from a subscriber unit based, in part, upon the location of the subscriber unit;

FIG. 7 is a diagram representing a satellite-based mobile telephone system performing the method of FIG. 6;

FIG. 8 is a block diagram of a parsing table of the system of FIG. 7;

FIG. 9 is a block diagram of an emergency services telephone number and location table of the system of FIG. 7;

FIG. 10 is a flowchart illustrating a method, in accordance with a third exemplary implementation of the invention, for coordinating lawful intercept of telephone calls to or from a subscriber unit based, in part, upon the location of the subscriber unit;

**FIG. 11 is** a diagram representing a satellite-based mobile telephone system performing the method of **FIG. 10;**

**FIG. 12** is a block diagram of a lawful intercept request table of the system of **FIG. 11;**

**FIG. 13** is a block diagram of an law enforcement jurisdiction table of the system of **FIG. 11;**

**FIG. 14** is a diagram representing an example of separate mapping schemes for use with multiple service providers in accordance with a fourth exemplary implementation of the invention;

**FIGS. 15A - 15D** are diagrams representing specific data structures employed in connection with the mapping schemes of **FIG. 14;**

**FIG. 16** is a flow chart illustrating a method for employing the separate mapping schemes of **FIG. 14;**

**FIG. 17** is a diagram representing a satellite-based mobile telephone system performing the method of **FIG. 16;**

**FIG. 18** is a diagram representing separate mapping schemes employing cell groups and information cells for use with a GSM system;

**FIG. 19** is a diagram illustrating an example of uniform cell groups;

**FIG. 20** is a diagram illustrating an example of non-uniform cell groups;

**FIG. 21** is a diagram illustrating a single cell group;

**FIG. 22** is a diagram illustrating a mapping table;

**FIG. 23** is a diagram illustrating a mapping table in relation to information cells and cell groups; and

**FIG. 24** is a diagram illustrating information cells on the border between two service provider areas.

## DETAILED DESCRIPTION OF THE PREFERRED EMBODIMENTS

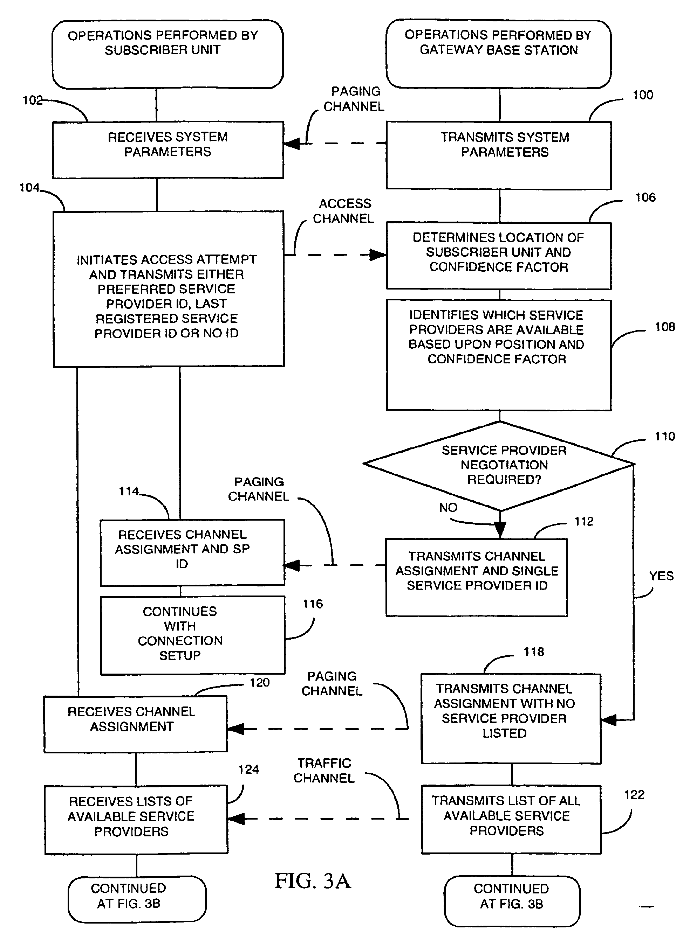

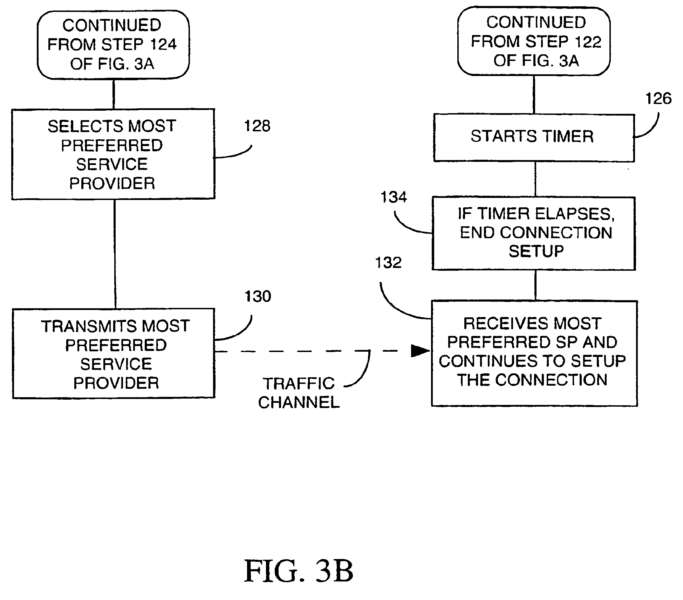

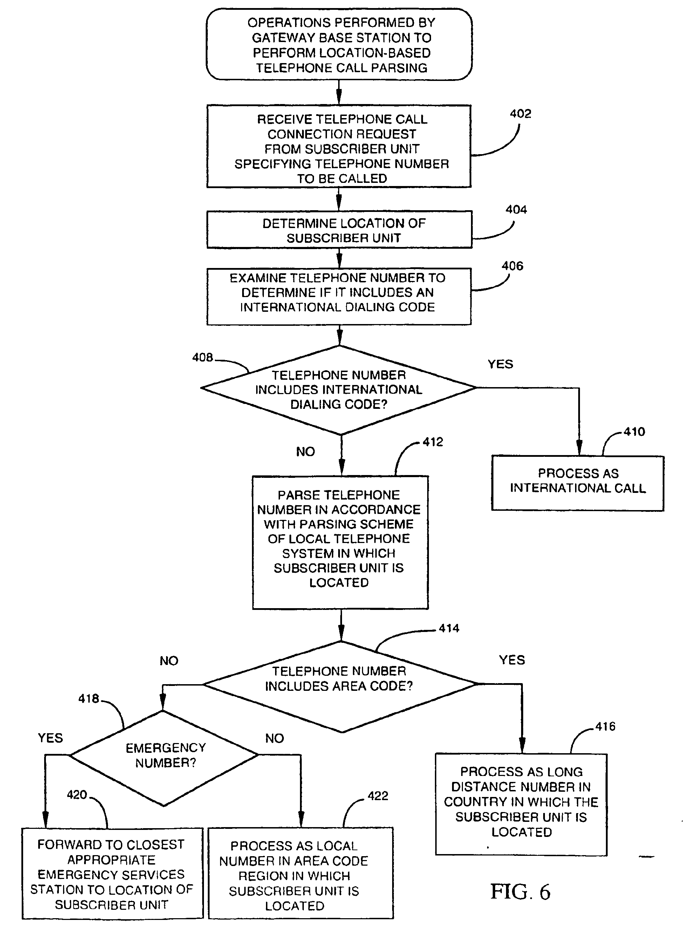

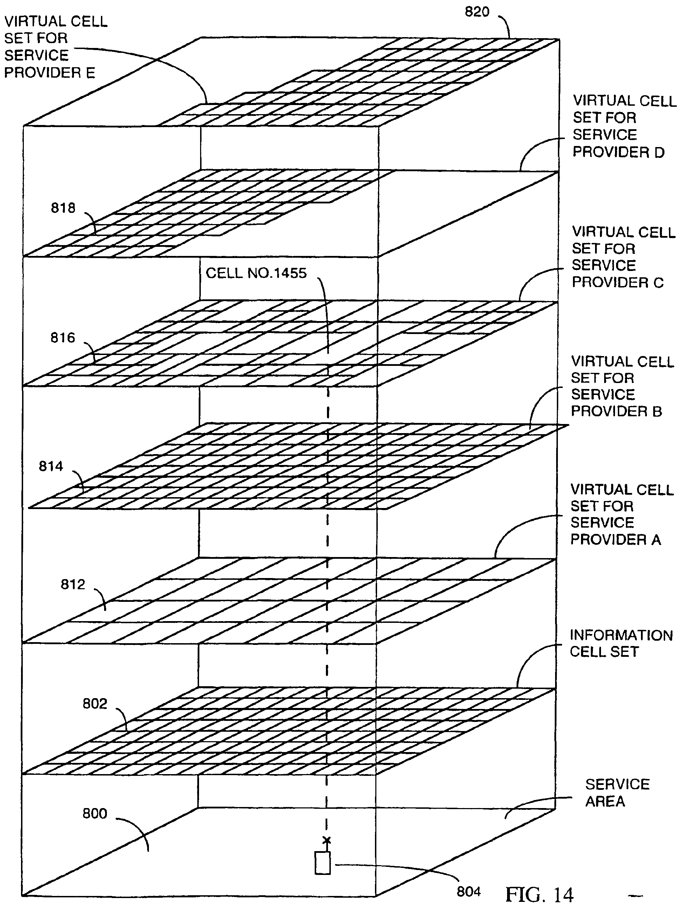

With reference to the remaining figures, preferred and exemplary embodiments of the invention will now be described. Initially, embodiments directed to selecting service providers for handling mobile telephone calls based upon subscriber unit location information and user preferences are described with reference to a satellite-based mobile communication system illustrated in **FIGS. 3 - 5.** Then, embodiments directed to processing telephone calls based on location information to, for example, parse telephone numbers based on the parsing scheme of the locality in which a subscriber unit is located, are described with reference to **FIGS. 6 - 13.** The, embodiments directed to processing location-based information, such as emergency services location information, using separate mapping schemes for separate service providers are described with reference to **FIGS. 14 - 24.** Some of the preferred embodiments of the invention conduct connection processing in accordance with the IS-41 standard, the use of which is well known in the art.

Service-Based Selection.

The flow chart of **FIGS**. **3A and 3B** illustrates operations performed during initiation of a connection from a subscriber unit. The figure illustrates, in tandem, both operations performed by the subscriber unit and those performed by the gateway ground station. Transmissions between the subscriber unit and ground station are represented by dashed arrows. All such transmissions are achieved by transmitting signals up to one or more satellites which relay the signals back to earth.

Initially, at step **100,** the ground station transmits system parameters over a paging channel which identify the gateway (by gateway_id), the service providers connected by the gateway (by service_id) and any other appropriate system parameters such as satellite beam_id. The system parameters are transmitted repeatedly and periodically such that any subscriber unit in the coverage area of the ground station may receive the information. The list of service providers transmitted specifies every service provider connected to the gateway including service providers which may not be available for use by the subscriber unit at its current position because of, for example, operational or contractual limitations.

At step **102,** the subscriber unit receives the system parameters over the paging channel. This step is typically performed when the subscriber unit is powered-up. The user then attempts to initiate a telephone call or other telephonic connection at step **104** at which time the subscriber unit transmits access information over an access channel including access registration requests, origination information, and channel requests. The subscriber unit also transmits a preferred selected service_provider_ID, if available, and a registration bit. In this regard, the subscriber unit first accesses a preferred service provider table or other data base (not shown) within the subscriber unit which identifies the preferred service provider. Depending upon the implementation, the subscriber unit may store only a single preferred service provider, a different preferred service provider for each gateway coverage area, or perhaps different preferred service providers for different times of the day or for different dates etc. If there is no preferred service provider listed, the mobile telephone transmits the ID of the service provider the mobile telephone was last registered with, perhaps as a result of a previous telephone connection, or simply does not transmit any service provider ID. If the subscriber unit transmits the ID of last registered service provider, the subscriber unit also transmits a registration bit of 1; otherwise the registration bit is transmitted as 0. If no preferred or last-registered service providers are available, the mobile telephone does not transmit any service provider information. In other implementations, the subscriber unit may transmit multiple service provider ID's ordered according to preference or may transmit service_provider_ID's that the subscriber unit, for some reason, cannot or will not allow itself to be connected to.

At step **106,** the gateway receives the access channel signals and attempts to determine the location of the subscriber unit to thereby determine what service providers are available for handling connections from the subscriber unit. In one embodiment, the satellites transmit to the gateway information representative of the relative time delays and frequency shifts of signals received from the subscriber unit by one or more satellites. Using that information and the information identifying the location of the satellites, the gateway approximates the location of the subscriber unit.

Various methods for performing position location in a satellite based wireless communication systems are described in US patents or applications entitled *"Unambiguous Position Determination Using Two Low-Earth Orbit Satellites",* published as US-B-6327534 *Position Determination Using One Low-Earth Orbit Satellite"* published as WO-A-9814795. *"Passive Positive Determination Using Two Low-Earth Orbit Satellites"* published as US-A-6078284, *"Ambiguity Resolution. For Ambiguous Position Solutions Using Satellite Beams"* published as US-A-5920284, *Determination Of Frequency Offsets In Communication Systems"* published as US-A5943606, and *"Method and Apparatus for Precorrecting Timimg and Frequency in Communication Systems"* published as WO-A-9815071, all assigned to the assignee of the present invention.

The gateway also assigns a confidence factor or level identifying how reliable or accurate the location determination is. The confidence level may be low when the location is determined using the above-described techniques employing relative time and frequency calculations. Nevertheless, the confidence level is typically at least sufficient to reliably identify the subscriber unit as being in a particular country or within a particular service provider region within a country. In the embodiment to be discussed below wherein GPS techniques are employed, the location determination may be very precise and the confidence factor thereby very high.

At step **1**08, the gateway determines which service providers are available for handling the telephone connection initiated by the subscriber unit based on the location of the subscriber unit. In this regard, the gateway accesses a service provider location table which represents the range of locations that each service provider handled by the gateway can cover. The range of locations may be represented, for example, as ranges of latitudes and longitudes. As noted, the range of locations may be affected by contractual or other legal constraints or by physical operating constraints. In any case, the gateway compares the location of the subscriber unit with the service provider coverage information of the database and identifies those service providers that are available.

The determination of the availability of a service provider may be affected by the confidence factor of the location determination. For example, if the location of the subscriber unit is found to be near a border or other dividing line between two service provider coverage areas but the confidence level is low such that the system cannot be certain which coverage area the subscriber unit is in, it may be necessary, perhaps on contractual grounds, to declare that neither service provider is available and that the telephone connection, therefore, cannot be completed. In other implementations, any service provider that has a coverage area that the subscriber unit might be in is identified as being available. Thus, if the subscriber unit is determined to be in Germany but the confidence level is so low that the subscriber unit may actually be in France instead, the gateway designates all appropriate French or German service providers as being available. Other variations and implementations are possible as well.

In this manner, the gateway identifies a list of available service providers, if any. If the subscriber unit transmits a preferred service provider ID, the gateway determines if the preferred service provider is among the available service providers and eliminates all others. If the subscriber unit transmits a list of service providers that are unacceptable, the gateway eliminates any from the list of available service providers for that subscriber unit. If the subscriber unit transmits a list of acceptable service providers ordered by preference, the gateway picks the most preferred. If the subscriber unit does not transmit a preferred service provider, but instead transmits the last registered service provider as identified by the set registration bit, and that provider is on the list, the gateway eliminates all other entries. Ultimately, this process yields a list of available service providers that either has no entries, one entry or multiple entries.

Next, the gateway determines at step 110 whether it needs to negotiate with the subscriber unit to allow selection of a single service provider. If either no service providers or only a single service provider remains on the list of available service providers, then no negotiation is needed. If none remain, a signal is sent to the subscriber unit indicating that connection setup cannot proceed. If more than one service provider remains on the list, then the gateway negotiates with the subscriber unit to allow the subscriber unit to select one of the available service providers.

If it is determined that no negotiation is required, at step 110, then execution proceeds to step 112, where the gateway assigns a traffic channel for the mobile telephone and transmits traffic channel assignment information on the paging channel to the subscriber unit. In the preferred embodiment, the traffic channel is a private non-shared signaling and user-traffic-bearing channel. The traffic channel assignment information includes an identification of the single service provider identified by the gateway. The subscriber unit receives the traffic channel assignment information identifying the service provider at step **114** and proceeds with connection set-up at step **116.** In some implementations, the subscriber unit may store a list of unacceptable service providers and, if the service provider identified in the traffic channel assignment message is unacceptable, the subscriber unit aborts the telephone connection or notifies the gateway that the service provider is unacceptable.

If it is determined that negotiation is required, at step **110,** then execution proceeds to step **118,** where the gateway assigns a traffic channel for the mobile telephone and transmits a traffic channel assignment information on the paging channel to the subscriber unit without a service provider ID. The subscriber unit receives the transmitted information at step **120.** Thereafter, the gateway transmits on the traffic channel, at step **122,** the list of acceptable service providers. The mobile station receives the list of available service providers at step **124.** Referring now to FIG. 3B, after the transmission, the gateway sets a timer, step **126.** The subscriber unit selects the most preferred one of the service providers at step **128** by comparing against a pre-stored list, and transmits the corresponding service provider ID at step **130** which the gateway receives at step **132** on the assigned traffic channel. If the timer set at step **126** expires before the gateway receives the most preferred service provider at step 132, the gateway terminates connection setup at step **134** and step **132** is, therefore, not executed. It should be noted that in the preferred embodiment of the invention, steps **118 - 134** are only required if the subscriber unit does not initially transmit preferred service provider information at step **104** such as if a suitable service provider cannot be determined during steps 104 - 110.

Hence, the subscriber unit and gateway together perform steps for selecting an appropriate service provider based upon the location of the subscriber unit,and any preferences specified by the subscriber unit. Once the selection is established, the subscriber unit and gateway proceed with processing the telephone connection. In one embodiment of the invention, the location of the subscriber unit is updated periodically during the connection, and, if the subscriber unit is found to have traversed into an area wherein the original service provider is no longer available, the gateway and subscriber unit re-negotiate for a new service provider and the appropriate steps of **FIG. 3** are repeated. Preferably these steps are performed without disrupting the mobile communication in progress. In some situations, however, it may be necessary to terminate the connection if a new available service provider cannot be found.

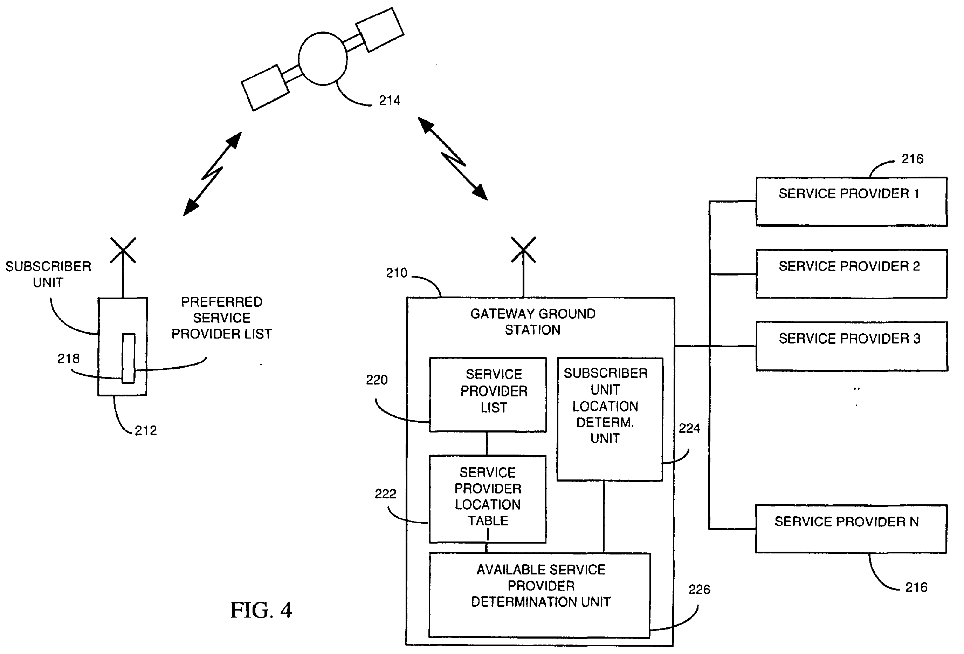

**FIG. 4** illustrates pertinent components of a satellite-based system configured to perform the steps of **FIG. 3A** and **3B.** The system is similar to that of **FIG. 1,** with like components identified by like reference numerals incremented by 100, and only pertinent differences will be described in detail. A gateway ground station **210,** subscriber unit **212** and satellite **214** are shown. Signals are transmitted between the subscriber unit and the gateway via the satellite. The gateway is also interconnected to a set of service providers, generally denoted **216,** which provide an interconnection to local land line telephone networks or other communication networks.

Subscriber unit **212** includes a preferred service provider list **218** for use in selecting a preferred service provider. As noted above, an ID of the preferred service provider is transmitted to gateway **210** either as part of an access request over the access channel or in response to a query from the gateway over received over the paging channel. Depending upon the implementations, the preferred service provider list may identify only a single service provider, a single service provider per gateway or perhaps a single service provider per country or area. The list may also identify service providers in order of preference. The list may also identify service providers that the user of the subscriber unit would prefer not to use including ones that, for one reason or another, the user will not or cannot access. Also depending upon the implementation, the service provider preference list is programmed by the subscriber unit manufacturer, point of sale personnel or the user. If the latter, the subscriber unit is provided with circuitry or software for receiving preferred service provider information from the user, perhaps input through a keypad of the subscriber unit or perhaps selected from a list presented to the user of a set of pre-stored permissible service providers. The database may alternatively be updated electronically via a dataport or updated based upon signals received via mobile communications from a gateway. In each case, all permissible service provider ID's are pre-stored such that the user need not know the ID's. Rather, the user need only know the name of the service provider. As can be appreciated, a wide variety of implementations are available.

Gateway **210** includes a service provider list **220** identifying all service providers connected to the gateway, a service provider location table **222** identifying the permissible coverage areas for each service provider of list **220,** a subscriber unit location determination unit **224** and an available service provider determination unit **226.** The subscriber unit location determination unit identifies the location of the mobile and applies that information to location table **222** to identify those service providers available for handling telephonic connections for subscriber units at that location. As noted above, the ability of a service provider to handle connections may be the subject of contractual other legal constraints. Also as noted, the location of the subscriber unit is determined subject to some degree or accuracy or confidence factor. The confidence factor may be employed, in the manner discussed above, by the available service provider determination unit **226** in identifying the acceptable service providers.

After a list of acceptable service providers is generated, gateway **210** performs the steps described above to negotiate, if necessary, with subscriber unit **212** to allow selection of one of the service providers. Once a service provider has been selected, the gateway routes signals between the subscriber unit and the selected service provider for further processing of the telephone connection. Subsequent telephone connections initiated by the subscriber unit require re-identification of a service provider, which may or may not be a different service provider than the previous one selected.

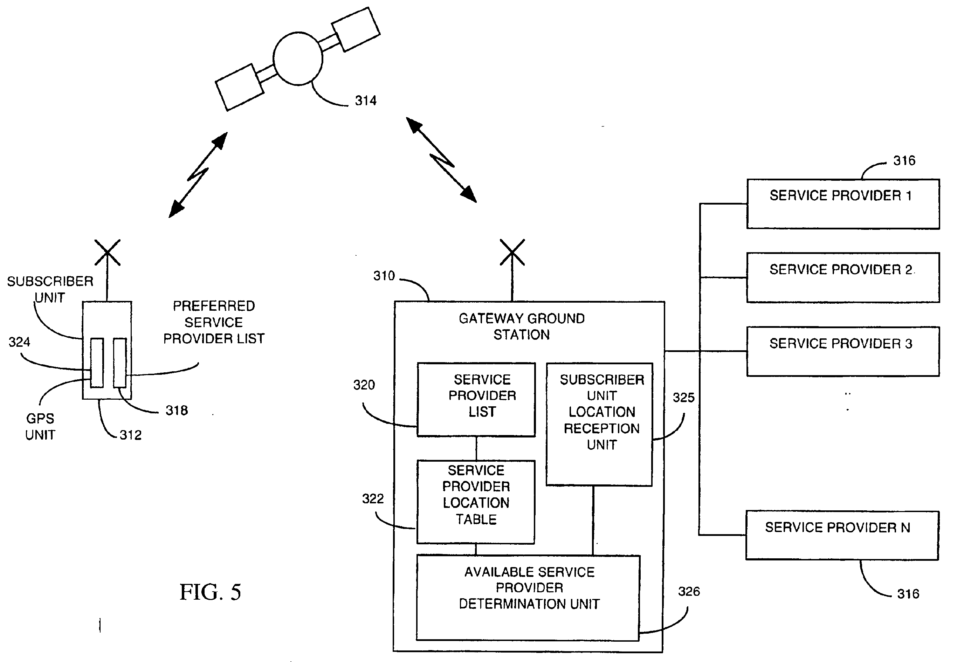

**FIG. 5** illustrates pertinent components of a system similar to that of **FIG. 4,** (with like components identifies by like reference numerals incremented by 100), but wherein the subscriber unit includes a GPS unit for determining location. Only pertinent differences will be described in detail.

A subscriber unit **312** is shown including a GPS unit **324** for determining the current location of the subscriber unit. GPS unit **324** determines the location of the subscriber unit in accordance with conventional GPS techniques and in connection with a fleet of GPS satellites (not separately shown). The location may be determined prior to initiation of a telephone connection or may be provided in response to a query from the gateway. In either case, once the location is determined, the subscriber unit transmits coordinates identifying the location to a gateway **310** to allow the gateway to determine which service providers are available for that location. The gateway then proceeds in the manner described above with reference to **FIG. 3** to negotiate with the subscriber unit, if necessary, to select one of the service providers.

Thus far techniques have been described with reference to a telephone connection initiated by a subscriber unit. Similar techniques are performed for subscriber unit terminated connections. Also, similar techniques are performed to register a subscriber unit upon power up and to update registration periodically. Further, similar techniques may be performed for other mobile communications besides telephone calls.

What has been described thus far is a system for selecting service providers for a mobile telephone system wherein selection is based upon location and user preferences. As noted, other selection criteria may also be employed. For example, selection may be based, in whole or in part, upon the transmission frequency used, the time of day or date, or other factors. The subscriber unit may store information specifying rate schedules for different service providers and select preferred service providers based upon the current lowest rate. Also, selection may be based upon exclusive factors, rather than on inclusive factors. In this regard, the selection process may select all service providers not otherwise specifically excluded, perhaps as a result of billing issues with respect to specific mobile users. As far as location-based or position-based selection is concerned, the position need not merely be limited to lat./long. positions on the ground. Selection may be further based upon altitude, velocity or speed. For example, different discrimination factors may be employed to select preferred service providers for subscriber units in airplanes, boats or trains than for hand-held subscriber units carried on foot or in a car. As to velocity, because velocity includes a directional vector, a service provider can be selected that will be able to provide the longest service given the subscriber unit's speed and direction. For example, if the subscriber unit is in an aircraft initially over a geographical area wherein two service providers are available, but moving in a direction where only one of the two will soon be available, the system will select that service provider as the better service provider for that particular mobile communication. In general, principles of the invention may be applied to perform service provider selection based upon any suitable factor. Further, principles may apply to selection of other operating characteristics besides service providers, as well. Also, the principles of the invention are not limited to satellite-based mobile communications systems but are applicable to other communications systems as well.

Location-Based Parsing of Telephone Numbers

[0050] With reference to **FIGS. 6 - 9**, embodiments of the invention directed to parsing telephone numbers received from a subscriber unit based upon the location of the subscriber unit will be described. Briefly, the gateway ground station detects a short telephone number string, such as a string without an area code, and interprets the short string as a local telephone number within the locality of the subscriber unit.

**FIG. 6** illustrates steps performed by the gateway ground station. Initially, at step **402,** the ground station receives a telephone call connection request (or any other mobile telephony connection request) from a subscriber unit. The connection request specifies a telephone number that the user of the subscriber unit wishes to contact, perhaps to establish a voice telephone call or a data communication call. The telephone number may be any of a variety of lengths. For example, the telephone number may be a seven digit local U.S. telephone number, a nine digit long distance U.S. telephone number or a longer international telephone number. The telephone number may alternately be of a wide variety of other lengths, particularly if the number being dialed is directed to a telephone number in another country having different standard telephone number lengths. Also, the length of the number may differ if it is a directory assistance number (such as the common U.S. directory assistance number "411"), a telephone repair assistance number (such as the common U.S. repair number "611"), an emergency services number (such as the common U.S. emergency number "911" or the common U.K. emergency number "999"), or the like.

At step **404**, the ground station determines the location of the subscriber unit. This may be accomplished using any suitable technique including the above-described techniques of receiving a fairly precise GPS-based location from the subscriber unit or receiving a somewhat approximate location as determined by the fleet of satellites. Although shown as occurring following the reception of the telephone number, the determination of the location of the subscriber unit may be made prior to reception of the telephone number or may be contemporaneous therewith. The location may be specified in any suitable manner including latitude and longitude components or predefined location grid components.

Once the location of the subscriber unit has been determined, the ground station interprets the received telephone number in accordance with the location as follows. At step **406,** the ground station parses the telephone number and determines, at step **408,** whether it includes an international dialing code. If so, step **410** is performed wherein the telephone number is processed as an international call by, for example, forwarding the call to the appropriate international operator for call completion. In some cases, the user may have unnecessarily entered an international dialing code. For example, the user may be located within the country specified by the international dialing code. If so, the system simply removes the international code from the telephone number and forwards the remaining digits of the telephone number to the local PSTN for call completion. If at step **408,** it is determined that the telephone number does not include an international calling code, then step **412** is performed wherein the telephone number is parsed in accordance with the local telephone system parsing rules in the vicinity of where the subscriber unit is located to determine whether it is a local number, a long distance number or an emergency services number. Hence, if the subscriber unit is located in the U.S., the telephone number is parsed in accordance with U.S. PSTN parsing schemes. If the subscriber unit is in India, for example, the telephone number is parsed in accordance with the India telephone system parsing scheme. Such parsing may be performed in accordance with conventional techniques. Exemplary parsing tables and techniques for the U.S. and India are described in co-pending U.S. Patent Application published as US-A-5812651, filed February 29, 1996, entitled *"Telephone Number Parser for Wireless Local Loop Telephones"*. Many local telephone number systems accommodate a wide range of telephone number configurations and access codes. Hence, complete parsing may be complicated. However, complete parsing typically need not be performed. Rather, for the method of **FIG. 6,** it is sufficient simply to determine whether the telephone number is a local number, a long distance number or is an emergency services number.

If, at step **414,** the telephone number is determined to be a long distance number (e.g. the telephone number includes an area code or other appropriate long distance identifier), then step **416** is performed wherein the telephone number is processed as a long distance number in the country in which the subscriber unit is located. As before, the user may have unnecessarily entered a long distance area code even though the user is located in the area specified by the code such that the telephone number being dialed is actually a local number. Again, the system merely removes the unnecessary area code and forwards the remaining digits to the local PSTN for call completion. The specific action performed depends upon the configuration of the local PSTN.

If, at step **414,** the telephone number does not include an area code, then the ground station determines, at step **418,** whether the digits of the telephone number represent an emergency number such as 911 or 999. If so, then at step **420,** the ground station identifies the closest appropriate emergency services center to the location of the subscriber unit and connects the call to that center. If not, then at step **422**, the ground station processes to the telephone number as a local call.

As to the emergency services numbers, the ground station maintains a list of all or most emergency services numbers (such as 911 or 999) in use anywhere in the world, and compares the received telephone number to the list to identify whether the number corresponds to one of the emergency services numbers. In this manner, the user need not know the appropriate emergency services number in the country or locality in which he or she is currently located. Rather, the user may simply use whatever emergency services code he or she is familiar with. Hence, a user from the U.K. may dial 999 in the U.S. and be connected to the local 911 operator. If there is any ambiguity, perhaps because a telephone number used as an emergency services number in one country is used for other purposes in the locality in which the user in located, then the system may further verify that the user wishes to be connected to an emergency services operator before completing the call. In this regard, the system may be configured to send an automatic voice message to the subscriber unit requesting verification.

As noted, emergency calls are connected to the nearest appropriate emergency services center to the location of the subscriber unit. In this regard, the ground station maintains a database identifying the locations of emergency services centers and compares the location of the subscriber unit with the database to identify the closest emergency services center. In this manner, the user is not improperly connected with a distant emergency services center. By "appropriate" emergency services center, it is meant that the ground station determines whether the emergency telephone number specifies any particular emergency service and forwards the call to the closest such service. For example, in locations or countries where there are separate emergency numbers for fire, ambulance, police, etc., the ground station connects the call to the closest appropriate center. In localities where a single emergency code is employed (such as 911), the call is merely connected to the nearest emergency operator to the location of the subscriber unit. In the method of **FIG. 6**, the received telephone number is only examined to determine if it is an emergency services number if it is a local number (i.e. if it has no international code or long distance code.) In other implementations all numbers, including those having area codes or international codes, may be examined to determine if they are emergency services numbers.

Hence, the ground station identifies an emergency services number, even if it is not of the type normally employed in the location of the subscriber unit, and forwards the call to the nearest appropriate emergency services center. As such, the user need not know the correct emergency services code for the country or location that he or she is in, thereby possibly saving considerable time in an emergency situation. Some mobile telephones or other subscriber units have dedicated emergency call buttons which transmit an appropriate emergency number, such as 911, or other signal. Such a signal is also detected and a telephone connection is made to the nearest appropriate emergency services center.

Also, as described, the system detects whether the number dialed is a local number and, if so, processes the number as a local number in the location in which the subscriber is located, thus freeing the user from the need to dial a long distance or international telephone number to contact a local telephone number.

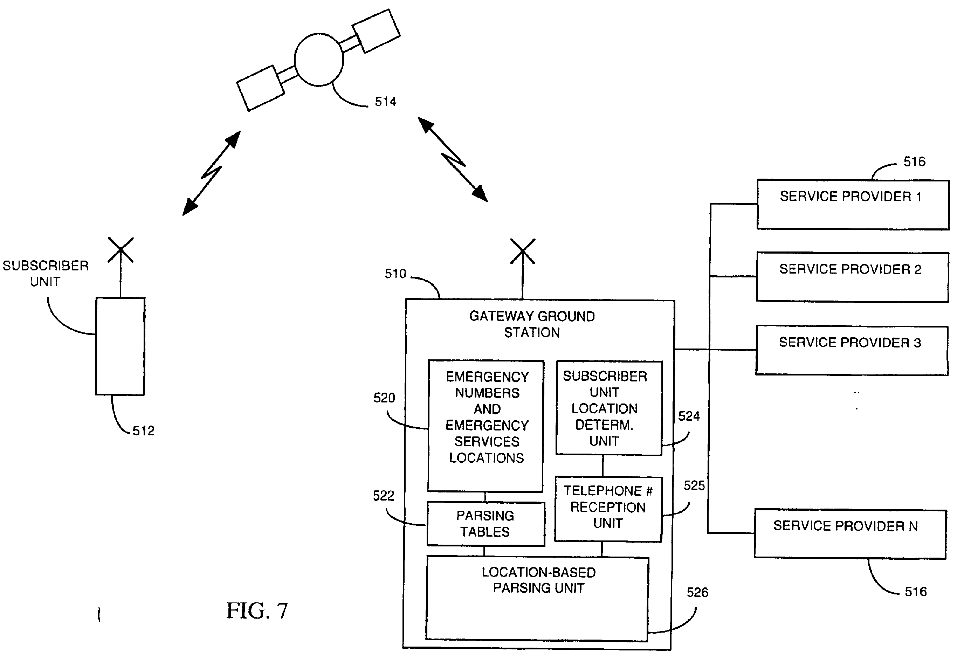

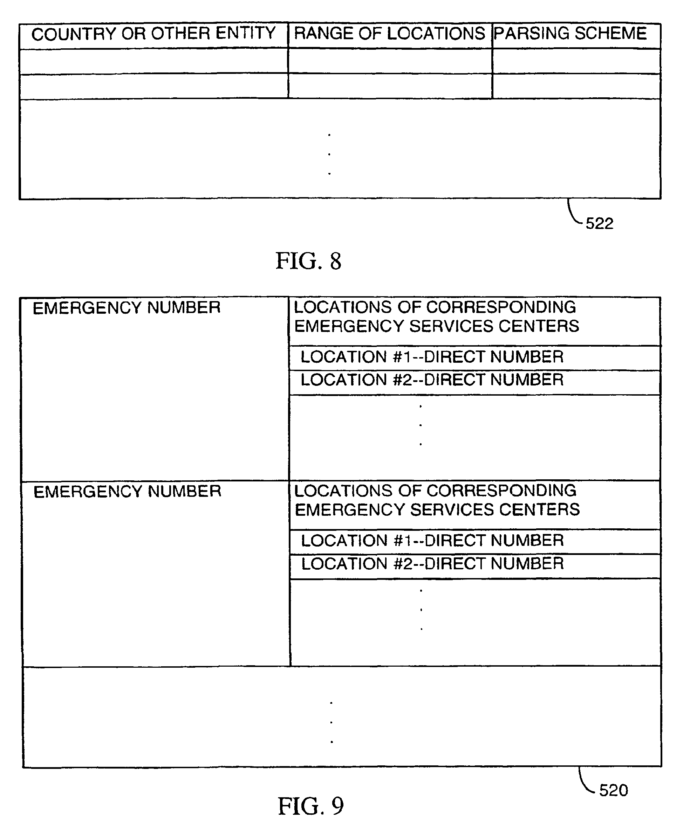

**FIGS. 7 - 9** illustrate pertinent components of a satellite-based system configured to perform the steps of **FIG. 6.** The system is similar to that of **FIG. 5,** with like components identified by like reference numerals beginning with reference numeral **510,** and only pertinent differences will be described in detail. **FIG. 7** illustrates a ground station **510,** an exemplary subscriber unit **512** and an exemplary satellite **514.** The subscriber unit includes a subscriber unit location determination unit **524** which receives signals identifying the location of the subscriber unit, a telephone number reception unit **525** which receives a telephone number from the subscriber unit and a parsing unit **526** which parses or otherwise interprets the telephone number based upon the location of the subscriber unit using the method of **FIG. 6.** To this end, parsing unit **526** accesses a set of parsing tables **522** and an emergency services number and location table **520.** Parsing table **520,** shown in greater detail in **FIG. 8,** includes, for each country or other entity having a separate parsing scheme, the range of locations wherein the scheme is employed and information regarding the parsing scheme itself. Parsing unit **526** (**FIG. 7**), compares the location of the subscriber unit with the ranges of locations in table **522** and outputs the appropriate parsing scheme for use in determining whether the telephone number received is a local number, a long distance number, etc. Table **522** may include, for example, one entry for the United States identifying the geographical boundaries of the U.S. and a set of parsing scheme records specifying that local numbers within the U.S. have seven digits, long distance numbers have eleven digits, and international numbers are prefaced by 01. A separate entry may be provided for each separate country or location, such as Mexico. Alternatively, for countries sharing the same basic parsing scheme, such as the U.S. and Canada, a single common entry may be provided having a range of locations specifying both countries. The ranges of locations may be specified by a set of latitudes and longitudes or perhaps by a set of grid coordinates.

Hence, the ground station applies the location of the subscriber unit to table **522** to determine the appropriate parsing scheme. As noted, the parsing scheme is employed to determine whether the received telephone number is a local number, a long distance number or an international number. If the location is not within one of the countries listed, such as if the user is on a boat or aircraft, then the system may select the closest likely country or may merely require that the user enter a full international telephone number.

**FIG. 9** illustrates emergency number table **520** employed to determine whether a received telephone number is an emergency services number. For each emergency services number, such as 911 or 999, the table stores the locations and direct telephone connection numbers (if applicable) of each of the corresponding emergency services centers. The ground station compares the received telephone number with the listed emergency services numbers and, if there is a match, directs the call to the closest appropriate emergency services center to the location of the subscriber unit. Hence, if the user dials 911 in the U.S., the ground station thereby identifies 911 as an emergency access number and identifies the closest 911 emergency operator to the location of the subscriber. The call is then directed to that particular 911 operator. The table additionally lists 999 in connection with U.S: emergency services centers such that, if a user dials 999 in the U.S., that number is also identified as an emergency number and the call is forwarded to the nearest 911 operator. Preferably, all appropriate emergency services numbers used world wide and all appropriate emergency services stations are stored and cross-referenced as needed to ensure that the user is connected to the closest appropriate emergency services center, whether it be a fire department, hospital, police department or general emergency operator. As can be appreciated, emergency number table 520 and the various other tables described herein can be configured and cross-referenced in accordance with a wide range of techniques.

Location-Based Coordination of Lawful Intercepts

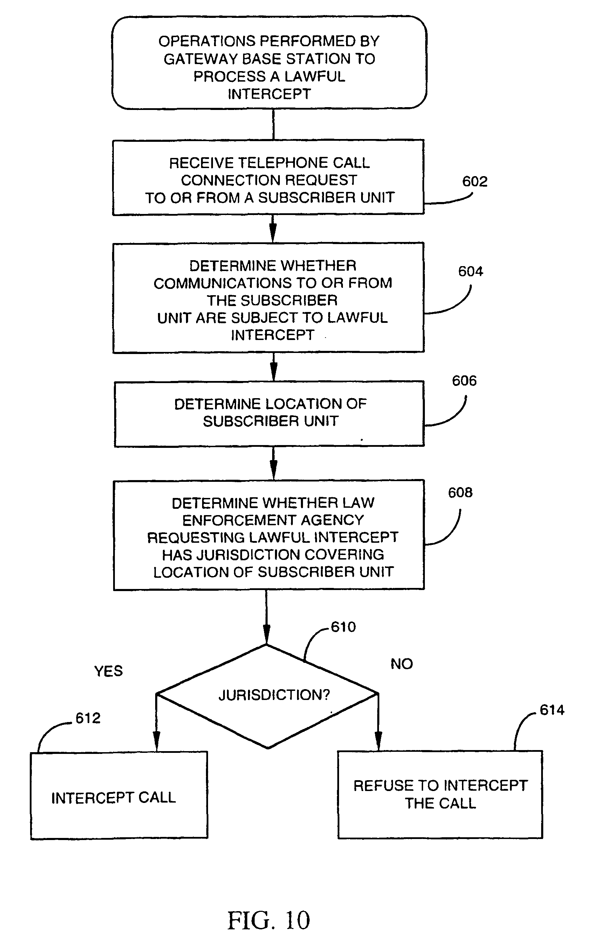

With reference to **FIGS. 10 - 13,** embodiments of the invention directed to coordinating lawful interception of telephone calls to or from a subscriber unit based upon the location of the subscriber unit will be described. Briefly, the gateway ground station maintains a list of subscriber units subject to lawful intercept and the jurisdiction in which such an interception is proper, verifies that the subscriber unit is at a location where jurisdiction is proper and, if so, intercepts, records, blocks or otherwise processes the telephone call in accordance with instructions provided by the requesting law enforcement agency.

**FIG. 10** illustrates steps performed by the gateway ground station in furtherance of lawful intercept processing. Initially, at step **602,** the ground station receives a telephone call connection request (or any other mobile telephony connection request) either from a subscriber unit or to a subscriber unit. If the call is to a subscriber unit, it may be from another subscriber unit, a conventional fixed land phone or any other device capable of establishing telephonic contact with the subscriber unit. In any case, the incoming "mobile terminated" call includes signals uniquely identifying the subscriber unit being called--perhaps by its unique telephone number, Internet Protocol (IP) address, or the like. If the call is outgoing (i.e. a "mobile initiated call"), the subscriber unit includes signals, provided along with the telephone number being dialed, that identify itself.

At step **604,** the ground station determines whether communications to or from the subscriber unit are subject to a lawful intercept or other similar action. This is achieved, as will be described below, by accessing a database table listing subscriber units subject to such intercepts. Then, at step **606,** the ground station determines the location of the subscriber unit. This may be accomplished using any suitable technique. Also, although shown as occurring following the determination of whether the call is subject to interception, the determination of the location of the subscriber unit may be made prior thereto or may be contemporaneous therewith.

Next, at step **608,** the ground station compares the location of the subscriber unit with the ranges of locations in which the requesting law enforcement agency has proper jurisdiction and, thereby, determines whether the telephone call can be lawfully intercepted. If jurisdiction is proper, step 610, then the call is intercepted or any other appropriate action requested by the law enforcement agency is performed, step **612.** If jurisdiction is not proper, the intercept is refused, step **614.** In either case, the telephone call typically proceeds. Usually, if the call is intercepted, such action is unbeknownst to the parties involved in the call. In other cases, however, the telephone call may simply be blocked. As an example, one party may have a court order to prevent another party from calling him or her, perhaps to prevent stalking or harassment. Such a court order may apply in one state but not another. Hence if the subscriber unit has moved into another state, blocking may not be legally permissible. As such, the system determines the location of the subscriber unit and performs automatic blocking depending upon its location.

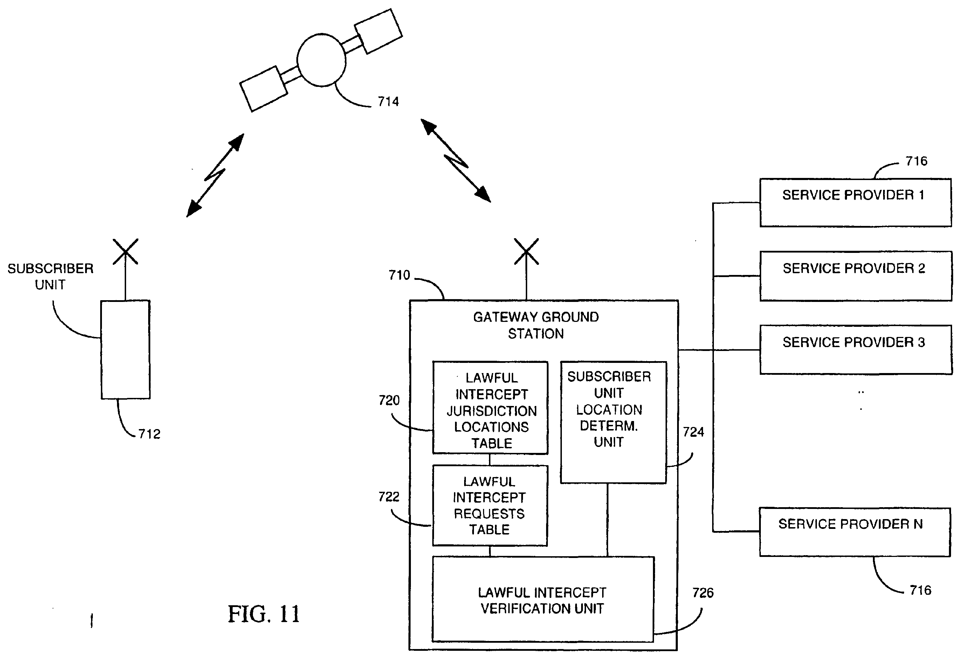

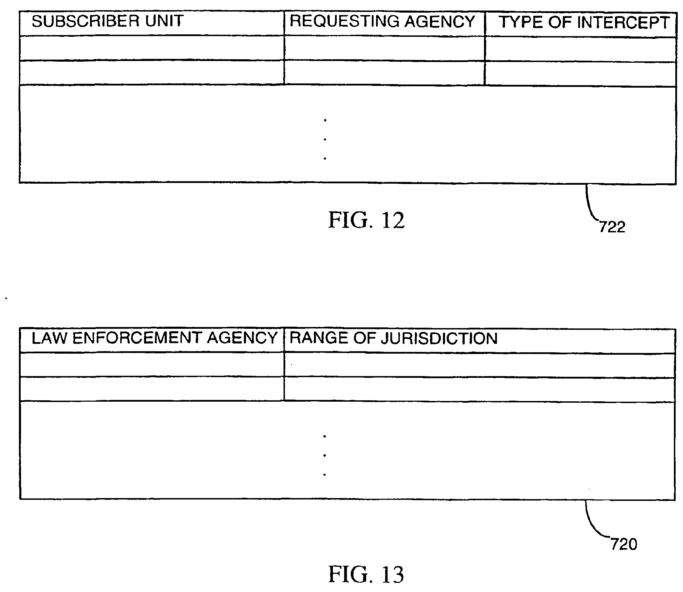

**FIGS. 11 - 13** illustrate pertinent components of a satellite-based system configured to perform the steps of **FIG. 10.** The system is similar to that of **FIG. 7,** with like components identified by like reference numerals beginning with reference numeral **710,** and only pertinent differences will be described in detail. **FIG. 11** illustrates a ground station 710, an exemplary subscriber unit **712** and an exemplary satellite **714.** The subscriber unit includes a subscriber unit location determination unit **724** which receives signals identifying the location of the subscriber unit and a lawful intercept verification unit **726** which determines whether telephone calls to or from the subscriber unit are subject to lawful intercept and, if so, whether such action is jurisdictionally permissible based upon the location of the subscriber unit, using the method of **FIG. 10.** To this end, verification unit 726 accesses a lawful intercept requests table **722** and a lawful interception jurisdiction locations table **720.** Requests table **722,** shown in greater detail in **FIG. 12,** includes, for each subscriber unit subject to some sort of lawful intercept, the identity of the law enforcement agency requesting the intercept and the type of interception to be performed. Examples of intercepts include recording the telephone call, if it is a voice call, or downloading transmitted data, if it is a data communication. Jurisdiction table **720,** shown in greater detail in **FIG. 13,** stores, for each law enforcement agency, the range of locations of subscriber units where the agency has jurisdiction. The range of locations over which jurisdiction is proper may depend upon the type of intercept being performed. Hence, the jurisdiction table may be further subdivided in accordance with the action to be performed. Moreover, the range of jurisdiction may depend upon the specific subscriber unit, i.e. for a given law enforcement agency, the agency may be authorized to intercept calls from one particular user anywhere in the U.S. but may be authorized to intercept calls from another user only when located in one specific state. Hence, information identifying the jurisdictional limitations associated with particular subscriber units may additionally be stored as needed either in jurisdiction table **720** or within intercept requests table **724.** Information is stored and updated in the jurisdiction and intercept requests databases upon proper request by the law enforcement agencies and is preferably entered by system operators only subject to court orders or other proper documentation. Such requirements differ, however, from country to country. In some countries, no such court orders or other documentation may be required. The range of proper jurisdiction is determined based upon the appropriate documentation, if any, provided by the requesting agency and typically no attempt is made to independently verify such jurisdiction.

In any case, verification unit **726 (FIG. 11),** determines whether the subscriber unit is subject to a lawful intercept, then compares the location of the subscriber unit with the ranges of locations of permissible jurisdiction in table **724** and, thereby, determines whether intercept is permissible and, if so, performs such interceptions. The actual interception may be performed in accordance with conventional techniques which will not be further described herein.

Any time limitations in the jurisdiction is also recorded in the database tables and the time and date of the telephone call are compared to the limitations specified in the database to determine for example, if jurisdiction has lapsed.

Multiple location mapping schemes

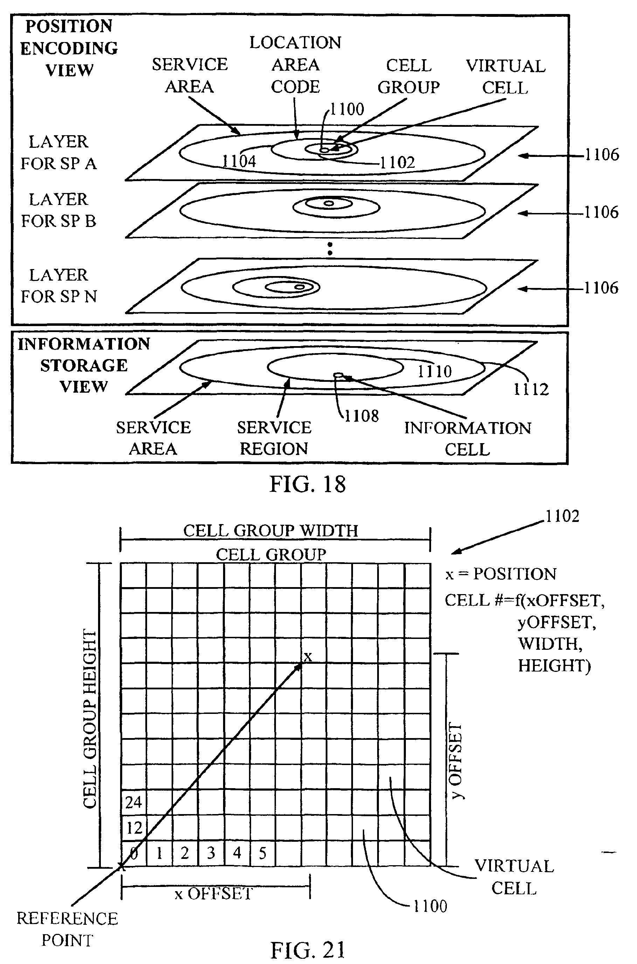

With reference to **FIGS. 14 - 24,** embodiments of the invention directed to providing separate mapping schemes for separate service providers to facilitate, among other things, the tracking of location-based system information will now be described. Initially, general aspects of the mapping schemes are described with reference to **FIGS. 14 - 17,** then details regarding one specific implementation used in connection with a GSM system is described with reference to **FIGS. 18 - 24.**

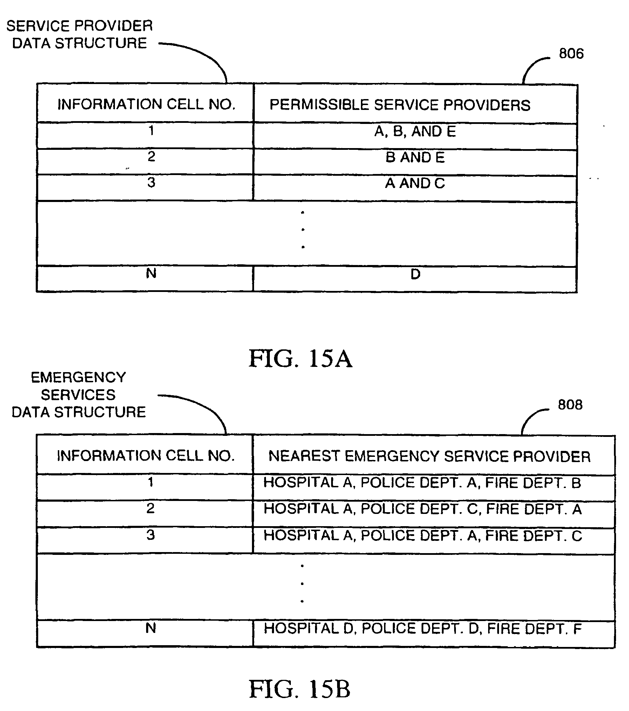

Briefly, the gateway system is provided with hardware or software for mapping physical locations within the service area of the gateway into various overlapping sets of virtual cells. **FIG. 14** illustrates exemplary sets of virtual cell maps overlaying a portion of the service area 800 of the gateway. A first set of cells 802, referred to herein as a set of information cells, covers or "tiles" the service area with uniformly sized and shaped rectangular cells. Each information cell covers a relatively small portion of the service area. The information cells may be of arbitrary size and shape but are preferably uniformly sized and shaped rectangles for ease of data processing and are each of a relatively small size, such as 10 km by 10 km squares, to allow for adequate location resolution. Each information cell contains pointers to data structures (shown in **FIGS. 15A-15C**) containing location-based information pertinent to the range of locations covered by the information cells. In the exemplary implementation described herein, the location-based information includes, among other items, i) an identification of where the nearest emergency services center is located, ii) an identification of what law enforcement agencies, if any, have jurisdiction to intercept calls to or from a subscriber unit, such as exemplary subscriber unit **804**, located within the range of physical locations defined by the information cell, and iii) an identification of what service providers are permitted to process calls to or from such subscriber units. In use, the location of a subscriber unit to which (or from which) a telephonic communication is initiated is determined, perhaps in terms of latitude and longitude, by techniques discussed above. Then the information cell corresponding to the location of the subscriber unit is identified, and the location-based information corresponding to that information cell is accessed, as needed. One particular technique for efficiently identifying the information cell based upon latitude and longitude estimates is described below in connection with a GSM implementation.

With reference to **FIGS. 14 and 15A - 15D**, the system first determines which service providers can permissibly process calls to or from the subscriber unit by accessing a service provider data structure **806 (FIG. 15A)** containing, for each information cell, a list of all permissible service providers, then selects one of the permissible service providers, perhaps using the preference-based selection techniques described above. Circumstances may arise wherein the boundary between service providers occurs within an information cell, rather than between information cells, and such is handled as described below. If the telephone call initiated by subscriber unit **804** specifies an emergency services number, the system determines the nearest emergency services center to the subscriber unit by examining an emergency services data structure **808 (FIG. 15B)** containing, for each information cell, an identification of the nearest emergency services centers, either in terms of its direct telephone number or any other appropriate designator. Depending upon the implementation and the country corresponding to the information cell, the data structure may list, for example, separate direct telephone numbers for hospital, fire, police, ambulance, poison centers, etc. For other implementations or for other countries, the data structure may merely list the appropriate general emergency services number for that country, such as "911" or "999". By first identifying the corresponding information cell then "looking up" the nearest appropriate emergency services center corresponding to that cell, the system need not compare the actual latitude and longitudes of the subscriber unit with those of all the emergency services centers in the service area to determine the nearest emergency services center and, therefore, routing of the call to the nearest emergency services center is expedited. As will be described below, service provider preferences for handling emergency calls may additionally be stored in connection with virtual service provider cells.

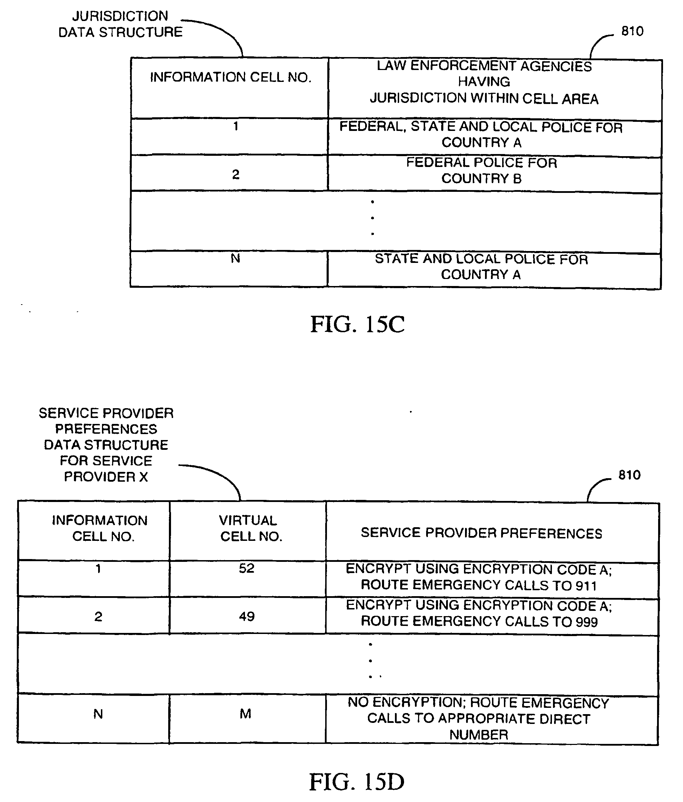

If communications to or from subscriber unit **804** are subject to lawful interception, the system determines whether the particular law enforcement agency has jurisdiction in the area covered by the information cell in which the subscriber unit is found by accessing a jurisdiction data structure **810** (**FIG. 15C**) specifying all law enforcement agencies that have jurisdiction over that specific information cell area and then proceeds to intercept the call if such is jurisdictionally permissible. Again, the system need not directly compare the latitude and longitude of the subscriber unit with ranges of latitudes and longitudes of jurisdiction and the system can thereby determine proper jurisdiction more expediently.

The remaining sets of cells illustrated in **FIG. 14**, i.e. sets **812, 814, 816**, **818**, and **820,** illustrate sets of individual virtual service provider cells, with one set per service provider. As can be seen, the individual sets of service provider cells provide different mapping schemes for mapping portions of service area **800**. Set **812**, for example, is provided for use in connection with service provider A. Set **812** is aligned with information cell set **802** but differs therefrom in resolution, i.e. each cell of set **812** covers four times the area of each cell of set **802**. Set **814** is provided for use with service provider B and has the same resolution as that of information cell set **802** but is slightly offset therefrom. Set **816** is provided for use with service provider C and has a non-uniform arrangement, perhaps corresponding with a previously defined land-based cellular telephone cell layout. Set **818** is provided for use with service provider D and has the same resolution and alignment as that of information cell set **802** but covers only a portion of the service area. Set **820**, which is provided for use with service provider E, also has the same resolution and alignment as that of information cell set **802** but covers only those portions of the service area not covered by set **818**.

The different service provider cell mappings are provided, in this exemplary implementation, to accommodate the requirements or preferences of the different service providers or to otherwise facilitate communication between the service provider and the gateway. In use, once a service provider is selected, the system determines the cell number for the virtual cell of the selected service provider that corresponds to the location of the subscriber unit. This is performed, for example, by comparing the latitude and longitude of the subscriber unit to ranges of locations defining each virtual cell of the service provider or by any other appropriate technique. Once the virtual cell for the selected service provider is determined, the system accesses information pertinent to communicating with the service provider or pertinent to processing the call. Such information may include unique cell number identification values for providing location encoding and service provider preferences regarding emergency call handling, call placement, encryption etc.

For example, to facilitate call handling, the service provider may require that the location of the subscriber unit be specified using a predetermined numerical code, rather than latitude and longitude values. A service provider preferences data structure **822** shown in **FIG. 15D** provides the predetermined virtual cell numerical code, if any, and also provides any preferences or requirements associated with the specific service provider for each virtual cell as defined by the appropriate numerical cell code. (A separate preferences data structure is provided for each separate service provider.) Location information may be required by the service provider, for example, to allow for proper billing of the cost of the call. Hence, if a particular service provider requires or prefers that the location of the subscriber unit be specified in terms of a predetermined cellular telephone cell numbering system (as with service provider C of **FIG. 14**), such can be readily accommodated, and the correct numerical cell designation employed to facilitate routing of the telephone call to the service provider. Thus, in the example of **FIG. 14**, the system forwards virtual cell number 1455 to service provider C (assuming it has been selected to handle a call initiated by subscriber unit **804**) as an identification of the location of the subscriber unit. Even if the service providers themselves have no preferences or requirements as far as cell or location designations are concerned, it is still often expedient for the gateway system to track telephone calls using different virtual cell identification numbers for different service providers. In such a case, each virtual service provider cell mapping may have the same size, alignment and shape, but differ only in numerical cell designators. In the specific GSM implementation described below, the numerical cell designators are related to LAC's.

Continuing with **FIGS. 14 and 15A - 15D**, if the telephone number dialed is an emergency services telephone number, the system determines whether the selected service provider has any particular emergency call routing requirements. For example, the selected service provider may prefer that a general emergency services number, such as 911, be used in some locations rather than any direct police or fire number specified in the emergency services data structure (**FIG. 15B**). In other locations covered by the service provider; the service provider may prefer that the specific direct number be employed. This is especially useful if the service provider covers areas within different countries. Other preferences or requirements for lawful interception, call encryption or any other location-based call handling features may be specified in the service provider preferences data structure (**FIG. 15D**).

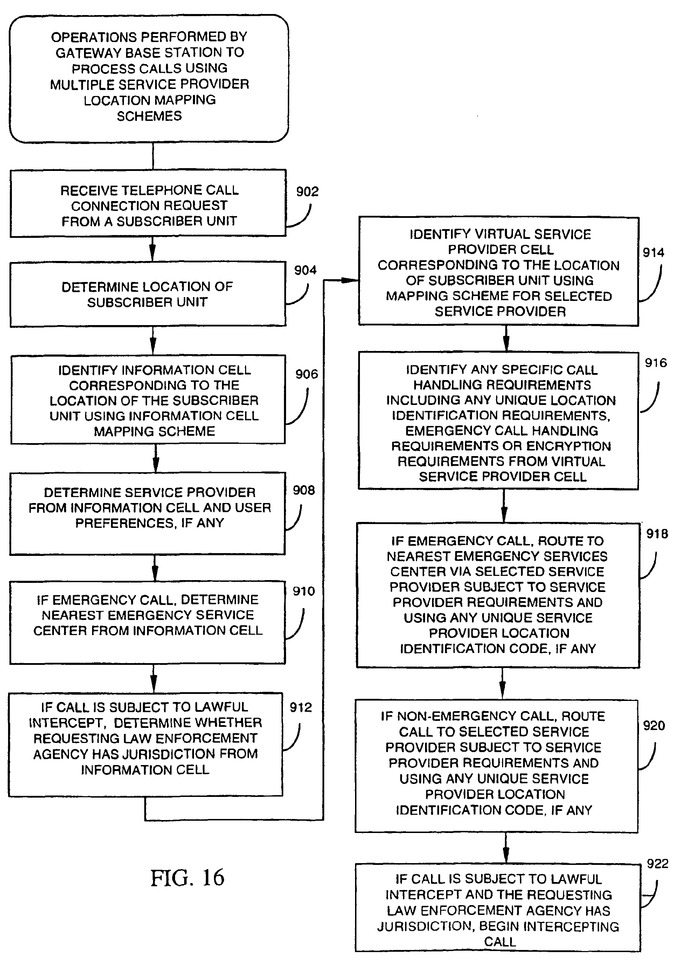

**FIG. 16** is a flowchart summarizing steps performed by the gateway ground system in connection with the separate mapping schemes discussed above. Initially, at step **902**, the system receives a telephone call connection request signal from a subscriber unit specifying, among other items, a telephone number to be connected to. At step **904**, the system determines the location of the subscriber unit using the techniques described above. If the subscriber unit is moving, the location may need to be updated periodically. The system, at step **906**, then identifies the information cell covering the location of the subscriber unit and then, at step **908**, determines the service provider to employ for processing the call, in part, by accessing the service provider data structure (**FIG. 15A**). Any subscriber preferences may be determined and employed in the manner described above. Next; at step **910**, also using techniques described above, the system determines whether the telephone number dialed is an emergency service number and, if so, the system determines the nearest appropriate emergency services center from the emergency services center data structure (**FIG. 15B**). At step **912**, the system determines whether the call is subject to lawful interception and, if so, determines whether the requesting law enforcement agency has jurisdiction to intercept or otherwise monitor the call by accessing the jurisdiction data structure (**FIG. 15C**).

At step **914**, the system identifies the virtual service provider cell corresponding to the information cell of the subscriber unit using the mapping scheme for that particular service provider as set forth in the appropriate service provider preference data structure (**FIG. 15D**). At step **916**, also using the preferences data structure, the system determines any specific location-based call handling preferences or requirements that might apply to the call including preferences or requirements related to emergency call routing, encryption, lawful intercept etc. At step **918**, if the call is to an emergency service center, the system routes the call to the nearest_ emergency service center using the selected service provider subject to any applicable preferences or requirements. At step **920**, if the call is a non-emergency call, the system routes the call using the selected service provider again subject to any applicable preferences or requirements, such as encryption requirements. At step **922**, if the call is subject lawful interception and the requesting law enforcement agency was found to have proper jurisdiction over the subscriber unit based on the location of the subscriber unit, the system then begins to intercept the call. The system may additionally or alternatively employ call interception techniques described above in connection with **FIGS. 10 - 13**.

Thus, **FIG. 16** summarizes steps performed to utilize the multiple service provider mapping schemes of the invention for a subscriber initiated call. Similar steps may be performed for subscriber terminated calls wherein the subscriber unit receiving the call is in the covered service area.

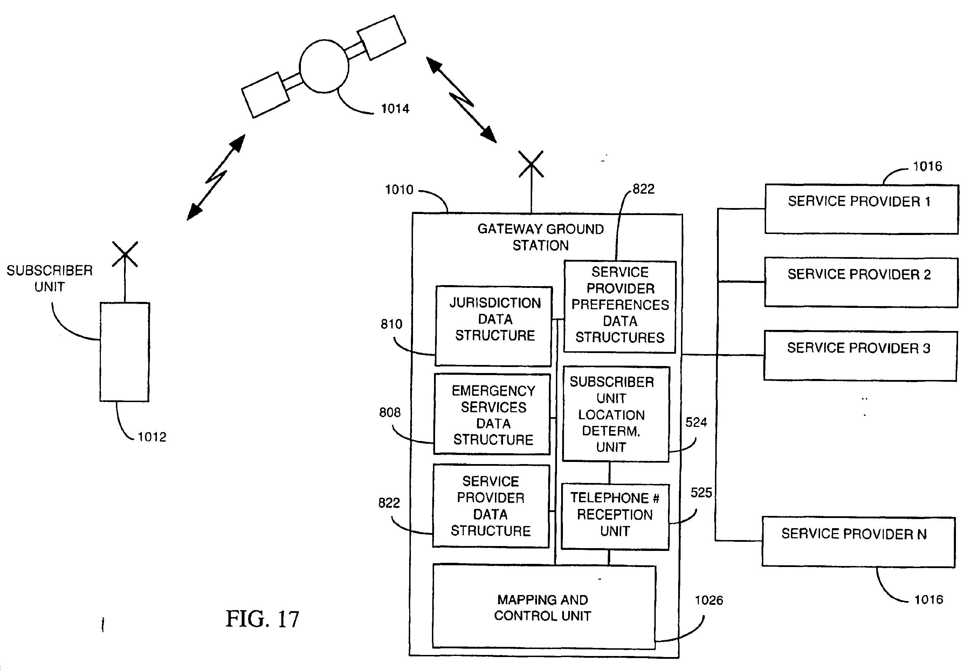

**FIGS. 17** illustrates pertinent components of a satellite-based system configured to perform the steps of **FIG. 16**. The system is similar to that of **FIG. 4, 5, 7 and 11**, and only pertinent differences will be described in detail. **FIG. 17** illustrates a ground station **1010**, an exemplary subscriber unit **1012** and an exemplary satellite **1014**. The ground station or gateway subscriber unit includes a subscriber unit location determination unit **1024** which receives signals identifying the location of the subscriber unit, a telephone number reception unit **1025** which receives a telephone number from the subscriber unit and a mapping and control unit **1026** which identifies the information cell that the subscriber unit is located in and controls processing of calls from the subscriber unit using the method of **FIG. 16**. To this end, information cell mapping unit **1026** accesses a set of data structures **806, 808, 810** and **822,** summarized above, to determine a service provider for processing the call (assuming it is a subscriber unit initiated call) and to coordinate emergency services call handling, lawful intercept, etc. in the manner described above.

GSM example of multiple location mapping schemes

Referring to **FIGS. 18 - 23**, a specific exemplary GSM-based gateway system employing multiple location mapping schemes for use with multiple service providers will now be described. The gateway is shared by up to sixteen service providers and covers an area up to 2000 km by 3000 km. The gateway utilizes separate virtual mapping schemes for each different service provider, thereby allowing GSM LAC's to be re-used, i.e. the same LAC can define up to sixteen different locations within the service area based upon sixteen different service providers. Each LAC includes cell groups each including a set of virtual cells. A separate mapping of virtual cells, cell groups, and LAC's are provided for each service provider. Information cells, of the type described above, are also employed to encode location-based information. The information cells uniformly cover the entire service area of the gateway system, and thereby, cover one or more service regions. A service region is an area covered by a single set of common service providers.

**FIG. 18** illustrates the relationship between virtual cells **1100,** cell groups **1102** and LAC's **1104** for each of a set of different service providers 1106. As can be seen, each mapping of virtual cells, cell groups and LAC's can differ from one service provider to another. **FIG. 18** also shows a corresponding mapping of information cells **1108,** service regions **1110** and service areas **1112** used to encode location information.

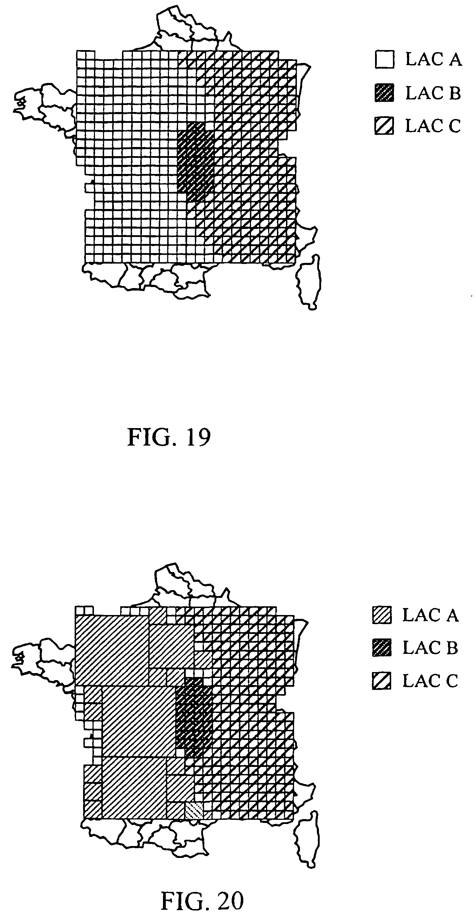

All of the virtual cells **1100** of a cell group **1102** are of the same size and shape and are uniformly tiled throughout the cell group. Both the virtual service provider cells and cell groups are rectangular. In one implementation, shown in **FIG. 19,** all cell groups are of the same size. In a preferred implementation, shown in **FIG. 20,** the cell groups are of different sizes. Hence, the virtual cells of the different cell groups may be of different sizes. The implementation of **FIG. 20,** which provides non-uniform cell groups, allows for different population densities to be accommodated to reduce the number of cell groups needed, and thereby reduce overall storage requirements and processing time. In the example shown in **FIG. 20,** which covers France, **453** fewer cell groups are required than using the uniform cell group arrangement of **FIG. 19.** In either case, some cell groups may overlap.

A collection of cell groups has a single corresponding LAC. The virtual service provider cells are each uniquely represented by a service provider code (SP) and a virtual cell identifier (VCI) code. The VCI code is represented by a LAC and a cell identification code (Cell_ID). The SP code is represented by a three-digit mobile country code (MCC) and a two-digit mobile network code (MNC). The VCI is provided to individual mobile switching centers (MSC's) for use in performing the location-based processing of the type described above to, for example, identify the nearest emergency service provider. If a particular service provider employs more than one MSC, the LAC is employed to select the appropriate MSC.

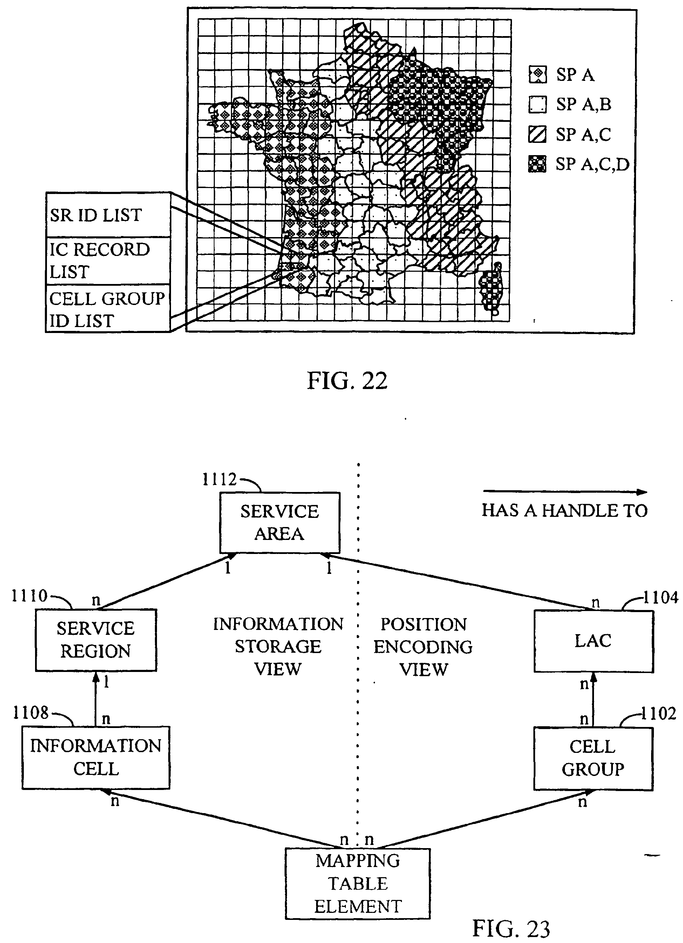

**FIG. 21** illustrates a single cell group **1102** composed of virtual cells **1100**. The location of a virtual cell is specified by a cell number. The cells are numbered as shown beginning with virtual cell "0". Hence the cell number for any particular cell is a function of x-direction and y-direction offsets from a reference point, and the width and height of the cells. That is:

Cell# = f(xoffset, yoffset, width, height).

The CellId is based upon the Cell# within the cell Cell Group and a base value for the cell Cell Group. An example is provided below for calculating a specific CellID.

Preferably, the virtual cells are defined to have a small radius of about 0.5 to 1.0 km to ensure sufficient position accuracy within about 10 km. Hence, for a 2000 km by 3000 km Gateway service area, between one million and eight million virtual cells are employed to cover the service area, thereby requiring 22-24 bits to encode and requiring 100 - 300 LAC's.

Information cells, as noted above, are tiled uniformly over the entire service area and likewise each have a radius of 0.5 km to 1.0 km. Each information cell contains information (or includes pointers to data structures) defining the available service providers, public safety answering points (i.e. emergency service centers) for use with IS-41 emergency calls and the nearest lawful intercept centers for use with IS - 41 intercepted calls. If the information cell lies on the border of the service area for a service provider, then the information cell also includes pointers to a data structure defining the shape of the border so that a more accurate determination of whether the subscriber unit is within the service area of the service provider can be made.

The information cells also contains information regarding the enclosing territory, i.e. country, and information regarding a minimum confidence threshold factor, if any, specified by the service provider to be employed in service provider selection. In this regard, the accuracy of the determination of the location of the subscriber unit may vary depending upon various factors such as the latitude of the subscriber unit. Some service providers may wish to process calls only from subscriber units having a fairly precisely defined location to ensure, for example, that the subscriber is actually in the service area of the service provider. In other cases, service providers may be limited by contract or for other legal reasons, from processing calls from subscriber units outside of their service area and, therefore, the service provider must have some minimum degree of confidence that the subscriber unit is within the permissible service region. In any case, the information cell specifies a minimum confidence threshold factor for each service provider that can provide service at the given cell and for each information cell. The system compares a position confidence factor received from the satellites as part of the location determination process for a particular subscriber unit, and then eliminates the service provider as a candidate for selection if the confidence factor falls below the minimum confidence threshold specified by the information cell.

The various data structures employed by the system, shown at a high level, in **FIGS. 15A - 15D,** include the following specific records.

An information cell record includes a cell header defining the information cell ID, the information cell center (in terms of lat. and long.) and the type of cell (i.e. border vs. interior). Each information cell also includes a cell body providing pointers to a service region definition record (SRDR) defining the service providers that can permissibly handle calls from that location, pointers to public safety answering point preference records, and lawful intercept center preference records, minimum confidence values for available service providers, and border shape information, if applicable.

A service region record includes a service region identifier, a set of pointers to the service provider SRDR's, pointers to a service area definition record for the enclosing territory. A cell group record includes a cell group ID, a pointer to a LAC record for the enclosing LAC, a reference point position for the cell group, the size of the cell group, and the Cell ID base values (one for each enclosing LAC). The LAC record includes a table that maps a cell ID to a cell group (i.e. an inverse mapping) and a pointer to a service area definition record for the service area containing the LAC. The service area definition record includes a service area identifier, a list of adjacent service areas, a list of service providers from other service areas that are allowed to provide service to terminating calls, and preferences or requirements regarding minimum confidence. The service provider preference record includes the identity of the service provider, any preferences regarding call placement, handling of emergency calls, and options regarding confidence and encryption. The service provider preference record also includes an MSC mapping table for use in determining the MSC based upon the current LAC.

A public safety answering point record includes the identity of the public safety answering point and preferences and requirements for rating the answering points. The answering point with the lowest rating is accessed first. A confidence factor may also be employed for defining whether the rating is to take effect. The answering point record also includes routing information. A lawful intercept center preference record includes the identify of the lawful intercept center and preferences or requirements regarding ratings and confidence. Routing information is likewise stored.

The various data structures and records are employed generally in the manner described above in connection with **FIGS. 14 - 17** to process a telephone call or other communication based upon the subscriber unit position as defined by the information cell and virtual service provider cells. Determination of the information cell and virtual cells is facilitated by employing a mapping table, shown in **FIG. 22,** which relates locations within the entire gateway service area to the aforementioned service records, information cell records, and cell group ID lists. The relationship of the mapping table to information cells and cell groups is shown in **FIG. 22.**

A subscriber unit location is mapped into the mapping table using latitude and longitude values provided by the satellites. A reference position designates the base of the table. Lat. and long. offsets are calculated between the reference position and the subscriber unit's position. The offsets are employed to index a location in the table. The location in the mapping table is then indexed into the information cells and the service provider virtual cell groups.

The distance between the reference point and the subscriber unit position is approximated by first determining the spacing in distance units for lat. and long. using the current latitude and using a table indexed by the reference point's lat. and containing entries for the distance between lat. and long units at the given lat. Then, lat. and long differences are determined, and finally distance offsets are determined. Hence, the distance between P1 and P2 is determined by calculating an x offset based upon long. difference times long. spacing and by calculating a y offset based upon lat. difference and lat. spacing. This approximation is adequate from distances up to 100 to 150 km. Hence, the mapping table entries and reference points are sized to ensure that the subscriber unit's position will always be less than about 100 km - 150 km from the nearest reference position. Other distance calculation techniques can alternately be employed.

The position mapping using the mapping table provides an information cell and a set of cell groups. Next, the service region is determined from the information cells. Then, a determination is made as to whether multiple service areas are involved, and the service region records are examined if more than one is available. Next, any border conditions, discussed below, are accounted for. Then, the VCI is computed using the cell group as follows. For each cell group that contains the position of the subscriber unit, the cell number is computed for the cell group using the position estimate. Then, for each LAC/CellID pair, the cell number is added to the Cell_ID base to obtain a final Cell_ID. The LAC value is used as the most significant sixteen bits of the VCI and the final Cell_ID as the least significant sixteen bits. The computed VCI is then associated with the service provider corresponding to the given LAC. In the example shown in FIG. 21, the cell number is 103. The cell number (103) is added to the Cell_ID base for each LAC to form a VCI. For example, if a LAC table specifies LAC1 having a LAC value of 0x03FE and a Cell_ID base of 12987 and a LAC2 having a LAC of 0x0023 and a CellID Base of 908, then:

$$\text{LAC 1 - final cell ID} = 12987 + 103 = 13090 = 0x3322; \text{VCI} = 0x03FE3322$$

$$\text{LAC 2 - final cell ID} = 908 + 103 = 1011 = 0x03F3; \text{VCI} = 0x002303F3.$$

The VCI is forwarded to the service provider, which typically corresponds to transmission to a GSM associated with the service provider. The VCI typically corresponds to the "Cell Identifier" in the context of a GSM based system, employed internally to track the location of the subscriber unit for the purposes of, for example, routing emergency calls etc. The VCI is not forwarded to the selected service provider because of constraints imposed on message types by GSM. Instead, the selected service provider receives the LAC.

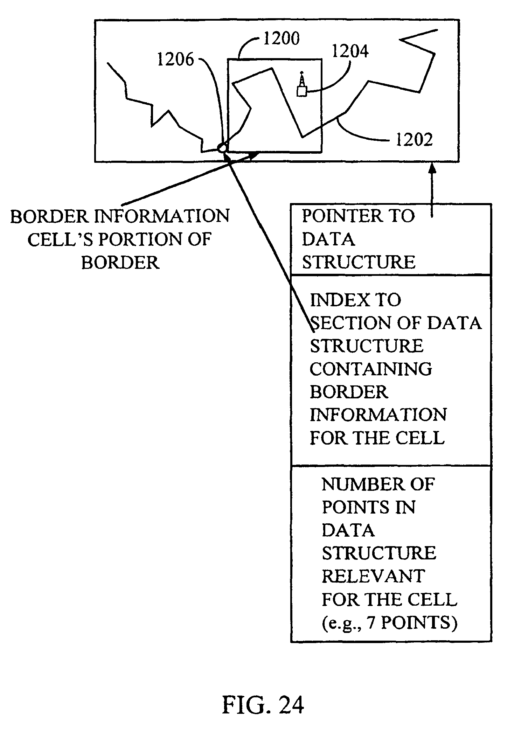

As noted above, circumstances may arise wherein the border of a service area lies within a single information cell. **FIG. 24** illustrates an information cell **1200,** the border **1202** of a service provider service area, and a subscriber unit **1204.** An identification of whether the service provider can permissibly handle a call to or from subscriber unit **1204** cannot be made solely by identifying the information cell. Such a cell is referred to as a border cell and includes pointers to a data structure defining the shape of the border. The border data structure represents the entire border of the service provider service area in terms of apex points connected by straight lines. The pointer to the border data structure identifies the first border apex point **1206** adjacent to the information cell and identifies the number of remaining apex points within the information cell. Hence, the system can then access all of the apex points within the information cell, reconstruct the shape of the border, and determine whether the location of subscriber unit **1204** lies within the service area.

The use of border cell maps has the advantage of providing greater resolution in the determination whether a subscriber unit is within the service area of a particular service provider but, as can be appreciated, requires greater processing time. In some implementations, therefore, border data structures are not employed.

What has been just been described is a specific GSM example of the use of multiple location mapping schemes. As noted above, multiple mapping schemes may be employed in connection with non-GSM systems as well.

The various exemplary embodiments discussed herein have been primarily described with reference to block diagrams illustrating apparatus elements and flow charts primarily illustrating method steps. As to the flowcharts, each block therein represents both a method step and an apparatus element for performing the recited step. Depending upon the implementation, each apparatus element, or portions thereof, may be configured in hardware, software, firmware or combinations thereof. It should be appreciated that not all components necessary for a complete implementation of a practical system are illustrated or described in detail. Rather, only those components necessary for a thorough understanding of the invention have been illustrated and described. Also, a practical system may include a combination of the features shown in the figures including, for example, a combination of the ground station elements of **FIGS. 5, 7 and 11.** Most examples herein have been described in connection with satellite-based systems. Principles of the invention however may be applied to any mobile telephony system including cellular telephone systems. For cellular systems, the location of the subscriber unit may be tracked or otherwise determined on a cell by cell basis.

Finally, the preceding description of the preferred and exemplary embodiments is provided to enable any person skilled in the art to make or use the present invention. The various modifications to these embodiments will be readily apparent to those skilled in the art, and the generic principles defined herein may be applied to other embodiments without the use of the inventive faculty.

**Claims**

**1.** A system for processing telephonic communications to or from a subscriber unit location within a service area of a mobile communications system, wherein said communication system has two or more separate service providers (1016), said system comprising:

> • means (1026) for mapping physical locations within the service area of the mobile communications system to a set of information cells (1108) storing location-based information corresponding to the physical location;
> • means for mapping physical locations within the service area of the mobile communications system to sets of virtual service provider cells (1100) with at least one separate set of virtual provider cells (1100) for each corresponding separate service provider (1016); and
> • means for processing communications between a subscriber unit (1012) within the service area and a service provider (1016) using the information cells and the corresponding virtual service provider cells.

2. The system of claim 1 wherein the information cell stores information representative of the service providers (1016), if any, providing service to subscriber units located at one of the physical locations covered by the information cell (1108).

3. The system of claim 2 wherein the information cells (1108) for the service area are all of the same size and shape and are tiled over the entire service area of the mobile communications system.

4. The system of claim 3 wherein information cells (1108) specifying a common set of service providers comprise a common service area.

5. The system of claim 3 wherein information cells (1108) corresponding to the border between service areas include data structures identifying the shape of the border and wherein means are provided for identifying the service area providing service to the physical location of the subscriber unit based upon the shape of the border as represented in the data structure.

6. The system of claim 2 wherein said means for processing communications between a subscriber unit and a service provider comprises:

   • means for receiving a telephone call connection request signal specifying a subscriber unit within the service area of the mobile communications system;
   • means (524) for determining the physical location of the subscriber unit (1012);
   • means (1028) for determining the information cell (1108) corresponding to the physical location of the subscriber unit;
   • means for determining a service provider for providing service at the physical location of the subscriber unit as identified by the information cell;
   • means for determining a virtual service provider cell (1100) corresponding to the information cell; and
   • means for outputting a signal representative of the virtual provider cell to the corresponding service provider (1016).

7. The system of claim 6 wherein the information cell (1108) additionally stores information representative of a minimum necessary degree of confidence to which each service provider, providing service at the physical locations covered by the information cell, is willing to accept telephonic communications to or from subscriber units located at one of the physical locations covered by the information cell based upon any uncertainty in a determination of the actual physical location of the subscriber unit; and

   • wherein the means for determining a service provider comprises means for selecting a service provider only if the uncertainty in the determination of the location of the subscriber unit does not exceed the minimum necessary degree of confidence.

8. The system of claim 6 wherein the information cell (1108) additionally stores information representative of the jurisdiction, if any, for law enforcement authorities to intercept telephonic communications to or from subscriber units at the physical locations covered by the information cell.

9. The system of claim 6 wherein the information cell (1108) additionally stores information representative of the nearest emergency services center to the physical locations covered by the information cell.

10. The system of claim 9 wherein said means for processing communications between a subscriber unit (1012) and a service provider (1014) further comprises:

    • means for determining whether the telephone call connection request identifies an emergency services call and, if so, for routing the call to the nearest emergency services center as identified by the information cell corresponding to the physical location of the subscriber unit.

11. The system of claim 1 wherein the virtual service provider cells (1100) for the service area of a corresponding service provider are arranged in cell groups (1102).

12. The system of claim 11 wherein all of the virtual cells (1100) are of the same size and shape and are uniformly tiled over the entire service area of the corresponding service provider.

13. The system of claim 11 wherein the virtual cells (1100) of a single cell group are all of the same size and shape and are tiled over the cell group.

14. The system of claim 11 wherein a collection of cell groups (1102) has a single corresponding location area code.

15. The system of claim 14 wherein the virtual service provider cells (1100) are each uniquely represented by a service provider code and a virtual cell identifier code.

16. The system of claim 15 wherein the virtual cell identifier code is represented by a location area code and a cell identification code.

17. The system of claim 11 and wherein different service providers (1016) handle communications for subscriber units in different geographical areas and wherein a different cell group mapping is provided for each different service provider.

18. The system of claim 17 wherein some cell groups (1102) overlap.

19. The system of claim 18 wherein the virtual service provider cells (1100) and cell groups are rectangular and the means for mapping said set of information cells (1108) to sets of virtual service provider cells includes:

    • means for storing the latitude and longitude of a corner location of each cell group
    • means for receiving an identification of the latitude and longitude of the subscriber unit;
    • means for determining latitude and longitude offsets between the corner location of a selected cell group in which the subscriber unit is located and the location of the subscriber unit; and
    • means for identifying the particular virtual cell of the selected cell group in which the subscriber unit is located based upon the latitude and longitude offsets.

20. A method for processing telephonic communications to or from a subscriber unit location within a service area of a mobile communications system, wherein said mobile communication system has two or more separate service providers (1016), said method comprising the steps of:

    • mapping physical locations within the service area of the mobile communications system to a set of information cells (1108) storing location-based information corresponding to the physical location;
    • mapping physical locations within the service area of the mobile communications system to sets of virtual service provider cells (1100) with at least one separate set of virtual provider cells for each corresponding separate service provider (1016); and
    • processing communications between a subscriber unit (1012) within the service area and a service provider (1016) using the information cells (1108) and the corresponding virtual service provider cells (1100).

21. The method of claim 20 wherein the information cell (1108) stores information representative of the service providers, if any, providing service to subscriber units located at one of the physical locations covered by the information cell.

22. The method of claim 21 wherein the information cells (110) for the service area are all of the same size and shape and are tiled over the entire service area of the mobile communications system.

23. The method of claim 22 wherein information cells specifying a common set of service providers comprise a common service area.

24. The method of claim 22 wherein information cells (1108) corresponding to the border between service areas include data structures identifying the shape of the border and the service area providing service to the physical location of the subscriber unit is identified based upon the shape of the border as represented in the data structure.

25. The method of claim 21 wherein said step of processing communications between a subscriber unit (1012) and a service provider comprises the steps of:

• receiving a telephone call connection request signal specifying a subscriber unit within the service area of the mobile communications system;

• determining the physical location of the subscriber unit (1012);

• determining the information cell (1108) corresponding to the physical location of the subscriber unit;

• determining a service provider (1016) for providing service at the physical location of the subscriber unit as identified by the information cell (1108);

• determining a virtual service provider cell (1100) corresponding to the information cell; and

• outputting a signal representative of the virtual provider cell (1100) to the corresponding service provider.

26. The method of claim 25 wherein the information cell (1108) additionally stores information representative of a minimum necessary degree of confidence to which each service provider, providing service at the physical locations covered by the information cell, is willing to accept telephonic communications to or from subscriber units located at one of the physical locations covered by the information cell based upon any uncertainty in a determination of the actual physical location of the subscriber unit; and

• wherein the step of determining a service provider (1016) includes the step of selecting a service provider only if the uncertainty in the determination of the location of the subscriber unit does not exceed the minimum necessary degree of confidence.

27. The method of claim 25 wherein the information cell (1108) additionally stores information representative of the jurisdiction, if any, for law enforcement authorities to intercept telephonic communications to or from subscriber units at the physical locations covered by the information cell.

28. The method of claim 25 wherein the information cell (1108) additionally stores information representative of the nearest emergency services center to the physical locations covered by the information cell.

29. The method of claim 28 wherein said step of processing communications between a subscriber unit (1012) and a service provider further comprises the steps of:

• determining whether the telephone call connection request identifies an emergency services call and, if so, for routing the call to the nearest emergency services center as identified by the information cell corresponding to the physical location of the subscriber unit (1012).

30. The method of claim 20 wherein the virtual service provider cells (1100) for the service area of a corresponding service provider are arranged in cell groups.

31. The method of claim 30 wherein all of the virtual cells (1100) are of the same size and shape and are uniformly tiled over the entire service area of the corresponding service provider.

32. The method of claim 30 wherein the virtual cells (1100) of a single cell group are all of the same size and shape and are tiled over the cell group.

33. The method of claim 30 wherein a collection of cell groups has a single corresponding location area code.

34. The method of claim 33 wherein the virtual service provider cells (1100) are each uniquely represented by a service provider code and a virtual cell identifier code.

35. The method of claim 34 wherein the virtual cell identifier code is represented by a location area code and a cell identification code.

36. The method of claim 30 and wherein different service providers handle communications for subscriber units (1012) in different geographical areas and wherein a different cell group mapping is provided for each different service provider.

37. The method of claim 36 wherein some cell groups overlap.

38. The method of claim 37 wherein the virtual service provider cells and cell groups are rectangular and the step of mapping said set of information cells (1108) to sets of virtual service provider cells includes the steps of

• storing the latitude and longitude of a corner location of each cell group;
• receiving an identification of the latitude and longitude of the subscriber unit;
• determining latitude and longitude offsets between the corner location of a selected cell group in which the subscriber unit is located and the location of the subscriber unit; and
• identifying the particular virtual cell of the selected cell group in which the subscriber unit is located based upon the latitude and longitude offsets.

**Patentansprüche**

1. Ein System zum Verarbeiten von telefonischen Kommunikationen zu oder von einem Ort einer Teilnehmereinheit innerhalb eines Versorgungsbereichs eines Mobilkommunikationssystems, wobei das Kommunikationssystem zwei oder mehr separate Dienstprovider (1016) besitzt, wobei das System Folgendes aufweist:

   Mittel (1026) zum Abbilden von physikalischen Orten innerhalb des Dienstbereiches des Mobilkommunikationssystems auf einen Satz von Informationszellen (1108), die ortsbasiert Informationen entsprechend zu dem physischen Ort speichern;
   Mittel zum Abbilden von physikalischen Orten innerhalb des Dienstbereichs des Mobilkommunikationssystems auf Sätze von virtuellen Dienstproviderzellen (1100) mit zumindest einem separaten Satz von virtuellen Providerzellen (1100) für jeden entsprechenden separaten Dienstprovider (1016); und
   Mittel zum Verarbeiten von Kommunikation zwischen einer Teilnehmereinheit (1012) innerhalb des Dienstbereichs und eines Dienstproviders (1016) unter Verwendung der Informationszellen und der entsprechenden virtuellen Dienstproviderzellen.

2. System nach Anspruch 1, wobei die Informationszelle Informationen repräsentativ für die Dienstprovider (1016), wenn vorhanden, speichert, wobei die Dienstprovider einen Dienst an Teilnehmereinheiten vorsehen, die an einem der physischen Orte, die von der Informationszelle (1108) abgedeckt sind, angeordnet sind.

3. System nach Anspruch 2, wobei die Informationszellen (1108) für den Dienstbereich alle dieselbe Größe und Form besitzen und über den gesamten Dienstbereich des Mobilkommunikationssystems kachel- bzw. fliesenartig verteilt sind.

4. System nach Anspruch 3, wobei die Informationszellen (1108), die einen gemeinsamen Satz von Dienstprovidern spezifizieren, einen gemeinsamen Dienstbereich aufweisen.

5. System nach Anspruch 3, wobei die Informationszellen (1108), die der Grenze zwischen den Dienstbereichen entsprechen, Datenstrukturen enthalten, die die Form der Grenze identifizieren und wobei Mittel vorgesehen werden, zum Identifizieren des Dienstbereiches, und zwar zum Vorsehen eines Dienstes an dem physischen Ort der Teilnehmereinheit basierend auf der Form der Grenze, wie sie in der Datenstruktur dargestellt ist.

6. System nach Anspruch 2, wobei die Mittel zum Verarbeiten von Kommunikationen zwischen einer Teilnehmereinheit und einem Dienstprovider Folgendes aufweisen:

   Mittel zum Empfangen eines Telefonanrufverbindungsanfragesignals, das eine Teilnehmereinheit innerhalb des Dienstbereiches des Mobilkommunikationssystems spezifiziert;
   Mittel (524) zum Bestimmen des physischen Ortes der Teilnehmereinheit (1012);
   Mittel (1026) zum Bestimmen der Informationszelle (1108) entsprechend des physischen Ortes der Teilnehmereinheit;
   Mittel zum Bestimmen eines Dienstproviders zum Vorsehen eines Dienstes an dem physischen Ort der Teilnehmereinheit, wie es durch die Informationszelle identifiziert ist;
   Mittel zum Bestimmen einer virtuellen Dienstproviderzelle (1100) entsprechend zu der Informationszelle; und
   Mittel zum Ausgeben eines Signals, repräsentativ für die virtuelle Providerzelle an den entsprechenden Dienstprovider (1016).

7. System nach Anspruch 6, wobei die Informationszelle (1108) zusätzlich Informationen speichert, und zwar repräsentativ für einen minimalen, nötigen Vertrauensgrad mit dem jeder Dienstprovider, der einen Dienst an den physischen Orten, die von der Informationszelle abgedeckt sind, vorsieht, bereit ist, telefonische Kommunikationen zu oder von Teilnehmereinheiten zu akzeptieren, die sich an einem der physischen Orte, abgedeckt von der Informationszelle, befinden, und zwar basierend auf jegliche Ungewissheit bzw. Ungenauigkeit einer Bestimmung des tatsächlichen physischen Ortes der Teilnehmereinheit; und

wobei die Mittel zum Bestimmen eines Dienstproviders Mittel aufweisen zum Auswählen eines Dienstproviders, nur dann wenn die Ungewissheit in der Bestimmung des Ortes der Teilnehmereinheit nicht den minimalen nötigen Vertrauensgrad überschreitet.

8. System nach Anspruch 6, wobei die Informationszelle (1108) zusätzlich Information speichert, die repräsentativ ist, für den Gerichtsstand, wenn einer vorhanden ist, für Strafverfolgungsbehörden, und zwar hinsichtlich des Abfangens von telefonischen Kommunikationen zu oder von Teilnehmereinheiten an den physischen Orten, die von der Informationszelle abgedeckt sind.

9. System nach Anspruch 6, wobei die Informationszelle (1108) zusätzlich Information speichert, die repräsentativ ist, für das nächstliegende Rettungsdienstzentrum hinsichtlich der physischen Orte, die von der Informationszelle abgedeckt sind.

10. System nach Anspruch 9, wobei die Mittel zum Verarbeiten von Kommunikation zwischen einer Teilnehmereinheit (1012) von einem Dienstprovider (1014) weiterhin Folgendes aufweisen:

Mittel zum Bestimmen, ob die Telefonanrufverbindungsanfrage einen Rettungsdienstanruf identifiziert und, wenn dies der Fall ist, zum Lenken des Anrufs an das nächstliegende Rettungsdienstzentrum, wie es durch die Informationszelle entsprechend zum dem physischen Ort der Teilnehmereinheit identifiziert ist.

11. System nach Anspruch 1, wobei die virtuellen Dienstproviderzellen (1100) für den Dienstbereich eines entsprechenden Dienstproviders in Zellgruppen (1102) angeordnet sind.

12. System nach Anspruch 11, wobei alle virtuellen Zellen (1100) dieselbe Größe und Form besitzen und gleichförmig über den gesamten Dienstbereich des entsprechenden Dienstproviders kachelförmig verteilt sind.

13. System nach Anspruch 11, wobei die virtuellen Zellen (1100) einer einzelnen Zellgruppe alle dieselbe Größe und Form besitzen und über die Zellgruppe kachelförmig verteilt sind.

14. System nach Anspruch 11, wobei eine Sammlung von Zellgruppen (1102) einen einzelnen entsprechenden Ortsbereichskode besitzen.

15. System nach Anspruch 14, wobei die virtuellen Dienstproviderzellen (1100) jeweils individuell durch einen Dienstproviderkode und einem virtuellen Zellidentifizierungskode repräsentiert werden.

16. System nach Anspruch 15, wobei der virtuelle Zellidentifizierungskode durch einen Ortsbereichskode und einen Zellidentifikationskode repräsentiert wird.

17. System nach Anspruch 11, wobei unterschiedliche Dienstprovider (1016) Kommunikationen für Teilnehmereinheiten in unterschiedlichen geographischen Bereichen handhaben und wobei eine unterschiedliche Zellgruppenabbildung für jeden unterschiedlichen Dienstprovider vorgesehen wird.

18. System nach Anspruch 17, wobei einige Zellgruppen (1102) sich überlappen.

19. System nach Anspruch 18, wobei die virtuellen Dienstproviderzellen (1100) und Zellgruppen rechteckig sind und die Mittel zum Abbilden des Satzes von Informationszellen (1108) auf Sätze von virtuellen Dienstproviderzellen Folgendes enthalten:

Mittel zum Speichern des Längen- und Breitengrades eines Eckortes einer jeder Zellgruppe;
Mittel zum Empfangen einer Identifikation des Längen- und Breitengrades der Teilnehmereinheit;
Mittel zum Bestimmen von Längen- und Breitengradversätzen zwischen dem Eckort einer ausgewählten Zellgruppe, in dem die Teilnehmereinheit angeordnet ist und dem Ort der Teilnehmereinheit; und
Mittel zum Identifizieren einer bestimmten virtuellen Zelle, der ausgewählten Zellgruppe, in der die Teilnehmereinheit angeordnet ist, und zwar basierend auf den Längen- und Breitengrad-Versätzen,

20. Ein Verfahren zum Verarbeiten von telefonischen Kommunikationen zu oder von einem Ort einer Teilnehmereinheit innerhalb eines Dienstbereichs eines mobilen Kommunikationssystems, wobei das mobile Kommunikationssystem zwei oder mehr separate Dienstprovider (1016) besitzt, wobei das Verfahren die folgenden Schritte aufweist:

Abbilden von physischen Orten innerhalb des Dienstbereichs des mobilen Kommunikationssystems auf einen Satz von Informationszellen (1108), die ortsbasierte Informationen entsprechend zu dem physischen Ort speichern;

Abbilden von physischen Orten innerhalb des Dienstbereiches des mobilen Kommunikationssystems auf Sätze von virtuellen Dienstproviderzellen (1100) mit zumindest einem separaten Satz von virtuellen Providerzellen für jeden entsprechenden separaten Dienstprovider (1016); und

Verarbeiten von Kommunikationen zwischen einer Teilnehmereinheit (1012) innerhalb des Dienstbereiches und einem Dienstprovider (1016) unter Verwendung der Informationszellen (1108) und den entsprechenden virtuellen

Dienstproviderzellen (1100).

21. Verfahren nach Anspruch 20, wobei die Informationszelle (1108) Information repräsentativ für die Dienstprovider, wenn vorhanden, speichert, wobei die Provider einen Dienst an Teilnehmereinheiten, die sich an einem der physischen Orte, die von der Informationszelle abgedeckt sind, angeordnet sind, vorsehen.

22. Verfahren nach Anspruch 21, wobei die Informationszellen (1100) über den Dienstbereich alle dieselbe Größe und Form besitzen und über den gesamten Dienstbereich des Mobilkommunikationssystems kachelförmig verteilt sind.

23. Verfahren nach Anspruch 22, wobei Informationszellen, die einen gemeinsamen Satz von Dienstprovidern spezifizieren, einen gemeinsamen Dienstbereich aufweisen.

24. Verfahren nach Anspruch 22, wobei die Informationszellen (1108), die der Grenze zwischen Dienstbereichen entsprechen, Datenstrukturen enthalten, die die Form der Grenze identifizieren und der Dienstbereich, der einen Dienst an dem physischen Ort der Teilnehmereinheit vorsieht, basierend auf der Form der Grenze, wie es in der Datenstruktur repräsentiert wird, identifiziert wird.

25. Verfahren nach Anspruch 21, wobei der Schritt des Verarbeitens von Kommunikationen zwischen einer Teilnehmereinheit (1012) und einem Dienstprovider die folgenden Schritte aufweist:

Empfangen eines Telefonanrufverbindungsanfragesignals, das eine Teilnehmereinheit innerhalb des Dienstbereiches des Mobilkommunikationssystems spezifiziert;

Bestimmen des physischen Ortes der Teilnehmereinheit (1012);

Bestimmen der Informationszelle (1108) entsprechend dem physischen Ort der Teilnehmereinheit;

Bestimmen eines Dienstproviders (1016) zum Vorsehen eines Dienstes an dem physischen Ort der Teilnehmereinheit, wie es durch die Informationszelle (1108) identifiziert wird;

Bestimmen einer virtuellen Dienstproviderzelle (1100) entsprechend zu der Informationszelle; und

Ausgeben eines Signals, repräsentativ für die virtuelle Providerzelle (1100) an den entsprechenden Dienstprovider (1016).

26. Verfahren nach Anspruch 25, wobei die Informationszelle (1108) zusätzlich Informationen speichert, die repräsentativ sind, für einen minimalen, nötigen Vertrauensgrad mit dem jeder Dienstprovider, der einen Dienst an den physischen Orten, die von der Informationszelle abgedeckt sind, vorsieht, bereit ist, telefonische Kommunikationen zu oder von Teilnehmereinheiten zu akzeptieren, die an einem der physischen Orte, die von der Informationszelle abgedeckt sind, angeordnet sind, und zwar basierend auf jegliche Unbestimmtheit bzw. Ungewissheit in der Bestimmung des tatsächlichen physischen Ortes der Teilnehmereinheit; und

wobei der Schritt des Bestimmens eines Dienstproviders (1016) den Schritt des Auswählens eines Dienstproviders, nur enthält, wenn die Ungewissheit in der Bestimmung des Ortes der Teilnehmereinheit nicht den minimalen nötigen Vertrauensgrad überschreitet.

27. Verfahren nach Anspruch 25, wobei die Informationszelle (1108) zusätzlich Information speichert, die repräsentativ ist, für den Gerichtsstand, wenn einer vorhanden ist, für Strafverfolgungsbehörden, und zwar hinsichtlich des Abfangens von telefonischen Kommunikationen zu oder von Teilnehmereinheiten an den physischen Orten, die von der Informationszelle abgedeckt sind.

28. Verfahren nach Anspruch 25, wobei die Informationszelle (1108) zusätzlich Information speichert, die repräsentativ ist, für das nächste Rettungsdienstzentrum hinsichtlich der physischen Orte, die von der Informationszelle abgedeckt sind.

29. Verfahren nach Anspruch 28, wobei der Schritt des Verarbeitens von Kommunikationen zwischen einer Teilnehmereinheit (1012) und einem Dienstprovider (1014) weiterhin die folgenden Schritte aufweist:

Bestimmen, ob die Telefonanrufverbindungsanfrage einen Rettungsdienstanruf identifiziert und, wenn dies der Fall ist, Lenken des Anrufs an das nächste Rettungsdienstzentrum, wie es durch die Informationszelle entsprechend zu dem physischen Ort der Teilnehmereinheit (1012) identifiziert ist.

30. Verfahren nach Anspruch 20, wobei die virtuellen Dienstproviderzellen (1100) für den Dienstbereich eines entsprechenden Dienstproviders in Zellgruppen angeordnet sind.

31. Verfahren nach Anspruch 30, wobei alle virtuellen Zellen (1100) dieselbe Größe und Form besitzen und gleichförmig über den gesamten Dienstbereich des entsprechenden Dienstproviders kachelförmig verteilt sind.

32. Verfahren nach Anspruch 30, wobei die virtuellen Zellen (1100) einer einzelnen Zellgruppe alle dieselbe Größe und Form besitzen und über die Zellgruppe hinweg kachelförmig verteilt sind.

33. Verfahren nach Anspruch 30, wobei eine Sammlung von Zellgruppen einen einzelnen entsprechenden Ortsbereichskode besitzt.

34. Verfahren nach Anspruch 33, wobei die virtuellen Dienstproviderzellen (1100) jeweils individuell bzw. einmalig durch einen Dienstproviderkode und einen virtuellen Zellidentifizierungskode repräsentiert werden.

35. Verfahren nach Anspruch 34, wobei der virtuelle Zellidentifizierungskode durch einen Ortsbereichskode und einen Zellidentifikationskode repräsentiert wird.

36. Verfahren nach Anspruch 30, wobei unterschiedliche Dienstprovider Kommunikationen von Teilnehmereinheiten (1012) in unterschiedlichen geographischen Bereichen handhaben und wobei eine unterschiedliche Zellgruppenabbildung für jeden unterschiedlichen Dienstprovider vorgesehen wird.

37. Verfahren nach Anspruch 36, wobei sich einige Zellgruppen überlappen.

38. Verfahren nach Anspruch 37, wobei die virtuellen Dienstproviderzellen und Zellgruppen rechteckig sind und der Schritt des Abbildens des Satzes von Informationszellen (1108) auf Sätze von virtuellen Dienstproviderzellen folgende Schritte aufweisen:

Speichern der Längen- und Breitengrade eines Eckortes einer jeden Zellgruppe;
Empfangen einer Identifikation der Längen- und Breitengrade der Teilnehmereinheit;
Bestimmen der Längen- und Breitengrad-Versätze zwischen dem Eckort einer ausgewählten Zellgruppe, in der sich die Teilnehmereinheit befindet und dem Ort der Teilnehmereinheit; und
Identifizieren der virtuellen Zelle, der ausgewählten Zellgruppe, in der die Teilnehmereinheit angeordnet ist, basierend auf den Längen- und Breitengrad-Versätzen.

**Revendications**

1. Système de traitement de communications téléphoniques en direction et à partir d'un emplacement de module d'abonné à l'intérieur d'une zone de service d'un système de communication mobile, dans lequel le système de communication mobile comprend deux fournisseurs de service séparés (1016), ou plus, ce système comprenant :

un moyen (1026) pour mapper des emplacements physiques dans la zone de service du système de communication mobile sur un ensemble de cellules d'information (1108) mémorisant des informations basées sur l'emplacement correspondant à l'emplacement physique ;
un moyen pour mapper des emplacements physiques dans la zone de service du système de communication mobile sur un ensemble de cellules virtuelles de fournisseur de service (1100), au moins un ensemble séparé de cellules virtuelles de fournisseur (1100) étant prévu pour chaque fournisseur de service séparé correspondant (1016) ; et

un moyen pour traiter des communications entre un module d'abonné (1012) dans la zone de service et un fournisseur de service (1016) en utilisant les cellules d'information et les cellules virtuelles de fournisseur de service correspondantes.

**2.** Système selon la revendication 1, dans lequel la cellule d'information mémorise des informations représentatives des fournisseurs de service (1016), s'il y en a, fournissant un service au module d'abonné disposé au niveau de l'un des emplacements physiques couverts par la cellule d'information (1108).

**3.** Système selon la revendication 2, dans lequel les cellules d'information (1108) pour la zone de service ont toutes la même dimension et la même forme et sont réparties sur toute la zone de service du système de communication mobile.

**4.** Système selon la revendication 3, dans lequel les cellules d'information (1108) spécifiant un ensemble commun de fournisseurs de service comprennent une zone de service commune.

**5.** Système selon la revendication 3, dans lequel les cellules d'information (1108) correspondant à la limite entre zones de service incluent des structures de données identifiant la forme de la limite, et dans lequel un moyen est prévu pour identifier la zone de service fournissant un service à l'emplacement physique du module d'abonné en fonction de la forme et de la limite tels que représentés dans la structure de données.

**6.** Système selon la revendication 2, dans lequel les moyens pour traiter des communications entre un module d'abonné et un fournisseur de service comprennent :

un moyen pour recevoir un signal de requête de connexion d'appel téléphonique spécifiant un module d'abonné dans la zone de service du système de communication mobile ;

un moyen (524) pour déterminer l'emplacement physique du module d'abonné (1012) ;

un moyen (1026) pour déterminer la cellule d'information (1108) correspondant à l'emplacement physique du module d'abonné ;

un moyen pour déterminer un fournisseur de service pour fournir un service à l'emplacement physique du module d'abonné tel qu'identifié par la cellule d'information ;

un moyen pour déterminer une cellule virtuelle de fournisseur de service (1100) correspondant à la cellule d'information ; et

un moyen pour fournir un signal représentatif de la cellule virtuelle de fournisseur au fournisseur de service correspondant (1016).

**7.** Système selon la revendication 6, dans lequel la cellule d'information (1108) mémorise en outre des informations représentatives d'un degré minimum nécessaire de confiance auquel chaque fournisseur de service, fournissant un service à des emplacements physiques couverts par la cellule d'information, souhaite accepter des communications téléphoniques en direction et à partir de modules d'abonné disposés à l'un des emplacements physiques couverts par la cellule d'information sur la base de toute incertitude de détermination de l'emplacement physique réel du module d'abonné ; et

dans lequel le moyen pour déterminer un fournisseur de service comprend un moyen pour sélectionner un fournisseur de service seulement si l'incertitude dans la détermination de l'emplacement du module d'abonné ne dépasse pas le degré minimum nécessaire de confiance.

**8.** Système selon la revendication 6, dans lequel la cellule d'information (1108) mémorise en outre des informations représentatives de la juridiction, s'il y en a, pour que des autorités légales interceptent des communications téléphoniques en direction et à partir de modules d'abonné aux emplacements physiques couverts par la cellule d'information.

**9.** Système selon la revendication 6, dans lequel la cellule d'information (1108) mémorise en outre des informations représentatives du centre de services d'urgence le plus proche des emplacements physiques couverts par la cellule d'information.

**10.** Système selon la revendication 9, dans lequel le moyen de traitement des communications entre un module d'abonné (1012) et un fournisseur de service (1014) comprend en outre :

un moyen pour déterminer si la requête de connexion d'appel téléphonique identifie un appel de services d'urgence et, si oui, pour acheminer l'appel vers le centre de services d'urgence le plus proche tel qu'identifié par la cellule d'information correspondant à l'emplacement physique du module d'abonné.

11. Système selon la revendication 1, dans lequel les cellules virtuelles de fournisseur de service (1100) pour la zone de service d'un fournisseur de service correspondant sont disposées par groupes de cellules (1102).

12. Système selon la revendication 11, dans lequel toutes les cellules virtuelles (1100) sont de même dimension et forme et sont empilées uniformément sur toute la zone de service du fournisseur de service correspondant.

13. Système selon la revendication 11, dans lequel toutes les cellules virtuelles (1100) d'un groupe unique de cellules ont la même dimension et la même forme et sont assemblées sur le groupe de cellules.

14. Système selon la revendication 11, dans lequel un ensemble de groupes de cellules (1102) a un code de zone d'emplacement correspondant spécifique.

15. Système selon la revendication 14, dans lequel les cellules virtuelles de fournisseur de service (1100) sont chacune représentée de façon spécifique par un code de fournisseur de service et un code identificateur de cellule virtuelle.

16. Système selon la revendication 15, dans lequel le code identificateur de cellule virtuelle est représenté par un code de zone d'emplacement et un code d'identification de cellule.

17. Système selon la revendication 11, dans lequel différents fournisseurs de service (1016) traitent des communications pour des modules d'abonnés dans des zones géographiques distinctes et dans lequel un mappage différent de groupe de cellules est prévu pour chaque fournisseur de service différent.

18. Système selon la revendication 17, dans lequel certains groupes de cellules (1102) se recouvrent.

19. Système selon la revendication 18, dans lequel les cellules virtuelles de fournisseur de service (1100) et les groupes de cellules sont rectangulaires et les moyens de mappage de l'ensemble de cellules d'information (1108) sur les ensembles de cellules virtuelles de fournisseur de service comprennent :

un moyen de mémorisation de la latitude et de la longitude de la localisation d'un coin de chaque groupe de cellules ;
un moyen pour recevoir une identification de la latitude et de la longitude du module d'abonné ;
un moyen pour déterminer les décalages de latitude et de longitude entre l'emplacement d'un coin d'un groupe de cellules choisi dans lequel le module d'abonné est situé et l'emplacement du module d'abonné ; et
un moyen pour identifier la cellule virtuelle particulière du groupe de cellules sélectionné dans lequel le module d'abonné est situé sur la base des décalages de latitude et de longitude.

20. Procédé de traitement de communications téléphoniques en direction et à partir d'un emplacement de modules d'abonnés dans une zone de service d'un système de communication mobile dans lequel le système de communication mobile comprend deux ou plusieurs fournisseurs de service séparés (1016), ce procédé comprenant les étapes suivantes :

mapper des emplacements physiques dans la zone de service du système de communication mobile sur un ensemble de cellules d'information (1108) mémorisant des informations basées sur l'emplacement correspondant à l'emplacement physique ;
mapper des emplacements physiques dans la zone de service du système de communication mobile sur un ensemble de cellules virtuelles de fournisseur de service (1100), au moins un ensemble séparé de cellules virtuelles de fournisseur étant prévu pour chaque fournisseur de service séparé correspondant (1016) ; et
traiter des communications entre un module d'abonné (1012) dans la zone de service et un fournisseur de service (1016) en utilisant les cellules d'information (1108) et les cellules virtuelles de fournisseur de service correspondantes (1100) .

21. Procédé selon la revendication 20, dans lequel la cellule d'information (1108) mémorise des informations représentatives des fournisseurs de service, s'il y en a, fournissant un service au module d'abonné disposé au niveau de l'un des emplacements physiques couvert par la cellule d'information.

**22.** Procédé selon la revendication 21, dans lequel les cellules d'information (1108) pour la zone de service ont toutes la même dimension et la même forme et sont réparties sur toute la zone de service du système de communication mobile.

**23.** Procédé selon la revendication 22, dans lequel les cellules d'information spécifiant un ensemble commun de fournisseurs de service comprennent une zone de service commune.

**24.** Procédé selon la revendication 22, dans lequel les cellules d'information (1108) correspondant à la limite entre zone de service incluent des structures de données identifiant la forme de la limite, et dans lequel la zone de service fournissant un service à l'emplacement physique du module d'abonné est identifiée en fonction de la forme et de la limite tels que représentés dans la structure de données.

**25.** Procédé selon la revendication 21, dans lequel l'étape de traitement des communications entre un module d'abonné (1012) et un fournisseur de service comprend les étapes suivantes :

recevoir un signal de requête de connexion d'appel téléphonique spécifiant un module d'abonné dans la zone de service du système de communication mobile ;
déterminer l'emplacement physique du module d'abonné (1012) ;
déterminer la cellule d'information (1108) correspondant à l'emplacement physique du module d'abonné ;
déterminer un fournisseur de service (1016) pour fournir un service à l'emplacement physique du module d'abonné tel qu'identifié par la cellule d'information (1108) ;
déterminer une cellule virtuelle de fournisseur de service (1100) correspondant à la cellule d'information ; et
fournir un signal représentatif de la cellule virtuelle de fournisseur (1100) au fournisseur de service correspondant.

**26.** Procédé selon la revendication 25, dans lequel la cellule d'information (1108) mémorise en outre des informations représentatives d'un degré minimum nécessaire de confiance auquel chaque fournisseur de service, fournissant un service à des emplacements physiques couverts par la cellule d'information, souhaite accepter des communications téléphoniques en direction et à partir de modules d'abonné disposés à l'un des emplacements physiques couverts par la cellule d'information sur la base de toute incertitude de détermination de l'emplacement physique réel du module d'abonné ; et
dans lequel l'étape de détermination d'un fournisseur de service (1016) comprend l'étape de sélection d'un fournisseur de service seulement si l'incertitude dans la détermination de l'emplacement du module d'abonné ne dépasse pas le degré minimum nécessaire de confiance.

**27.** Procédé selon la revendication 25, dans lequel la cellule d'information (1108) mémorise en outre des informations représentatives de la juridiction, s'il y en a, pour que des autorités légales interceptent des communications téléphoniques en direction et à partir de modules d'abonné aux emplacements physiques couverts par la cellule d'information.

**28.** Procédé selon la revendication 25, dans lequel la cellule d'information (1108) mémorise en outre des informations représentatives du centre de services d'urgence le plus proche des emplacements physiques couverts par la cellule d'information.

**29.** Procédé selon la revendication 28, dans lequel l'étape de traitement des communications entre un module d'abonné (1012) et un fournisseur de service comprend en outre l'étape de :

déterminer si la requête de connexion d'appel téléphonique identifie un appel de services d'urgence et, si oui, pour acheminer l'appel vers le centre de services d'urgence le plus proche tel qu'identifié par la cellule d'information correspondant à l'emplacement physique du module d'abonné (1012).

**30.** Procédé selon la revendication 20, dans lequel les cellules virtuelles de fournisseur de service (1100) pour la zone de service d'un fournisseur de service correspondant sont disposées par groupes de cellules.

**31.** Procédé selon la revendication 30, dans lequel toutes les cellules virtuelles (1100) sont de même dimension et forme et sont empilées uniformément sur toute la zone de service du fournisseur de service correspondant.

**32.** Procédé selon la revendication 30, dans lequel toutes les cellules virtuelles (1100) d'un groupe unique de cellules ont la même dimension et la même forme et sont assemblées sur le groupe de cellules.

33. Procédé selon la revendication 30, dans lequel un ensemble de groupes de cellules a un code de zone d'emplacement correspondant spécifique.

34. Procédé selon la revendication 33, dans lequel les cellules virtuelles de fournisseur de service (1100) sont chacune représentée de façon spécifique par un code de fournisseur de service et un code identificateur de cellule virtuelle.

35. Procédé selon la revendication 34, dans lequel le code identificateur de cellule virtuelle est représenté par un code de zone d'emplacement et un code d'identification de cellule.

36. Procédé selon la revendication 30, dans lequel différents fournisseurs de service traitent des communications pour des modules d'abonnés (1012) dans des zones géographiques distinctes et dans lequel un mappage différent de groupe de cellules est prévu pour chaque fournisseur de service différent.

37. Procédé selon la revendication 36, dans lequel certains groupes de cellules se recouvrent.

38. Procédé selon la revendication 37, dans lequel les cellules virtuelles de fournisseur de service et les groupes de cellules sont rectangulaires et l'étape de mappage de l'ensemble de cellules d'information (1108) sur les ensembles de cellules virtuelles de fournisseur de service comprend les étapes suivantes :

mémoriser la latitude et la longitude de la localisation d'un coin de chaque groupe de cellules ;
recevoir une identification de la latitude et de la longitude du module d'abonné ;
déterminer les décalages de latitude et de longitude entre l'emplacement d'un coin d'un groupe de cellules choisi dans lequel le module d'abonné est situé et l'emplacement du module d'abonné ; et
identifier la cellule virtuelle particulière du groupe de cellules sélectionné dans lequel le module d'abonné est situé sur la base des décalages de latitude et de longitude.

EP 0 995 323 B1

14

16

SERVICE PROVIDER
A

SERVICE PROVIDER
B

SUBSCRIBER UNIT
[IR UNIT]

GATEWAY
GROUND STATION

SERVICE PROVIDER
C

12

10

SERVICE PROVIDER
N

FIG. 1

16

GATEWAY BASE STATION

SUBSCRIBER UNIT

20

22

24

18

GATEWAY COVERAGE AREA

FIG. 2

EP 0 995 323 B1

```
┌─────────────────────────┐                    ┌─────────────────────────┐
│ OPERATIONS PERFORMED BY │                    │ OPERATIONS PERFORMED BY │
│     SUBSCRIBER UNIT     │                    │   GATEWAY BASE STATION  │
└─────────────────────────┘      PAGING        └─────────────────────────┘
                                 CHANNEL
        102                                                          100
  ┌──────────────────────┐                    ┌──────────────────────┐
  │   RECEIVES SYSTEM    │◄─ ─ ─ ─ ─ ─       │  TRANSMITS SYSTEM    │
  │     PARAMETERS       │                    │     PARAMETERS       │
  └──────────────────────┘                    └──────────────────────┘
        104                        ACCESS                             106
  ┌──────────────────────┐        CHANNEL     ┌──────────────────────┐
  │  INITIATES ACCESS    │                    │  DETERMINES LOCATION OF │
  │  ATTEMPT AND TRANSMITS│─ ─ ─ ─ ─►        │  SUBSCRIBER UNIT AND │
  │  EITHER PREFERRED    │                    │  CONFIDENCE FACTOR   │
  │  SERVICE PROVIDER ID,│                    └──────────────────────┘
  │  LAST REGISTERED     │                    ┌──────────────────────┐
  │  SERVICE PROVIDER ID │                    │  IDENTIFIES WHICH    │  108
  │  OR NO ID            │                    │  SERVICE PROVIDERS   │
  └──────────────────────┘                    │  ARE AVAILABLE BASED │
                                              │  UPON POSITION AND   │
                                              │  CONFIDENCE FACTOR   │
                                              └──────────────────────┘
```

DETERMINES LOCATION OF SUBSCRIBER UNIT AND CONFIDENCE FACTOR — 106

IDENTIFIES WHICH SERVICE PROVIDERS ARE AVAILABLE BASED UPON POSITION AND CONFIDENCE FACTOR — 108

SERVICE PROVIDER NEGOTIATION REQUIRED? — 110

NO

PAGING CHANNEL

114

RECEIVES CHANNEL ASSIGNMENT AND SP ID

TRANSMITS CHANNEL ASSIGNMENT AND SINGLE SERVICE PROVIDER ID — 112

YES

CONTINUES WITH CONNECTION SETUP — 116

118

TRANSMITS CHANNEL ASSIGNMENT WITH NO SERVICE PROVIDER LISTED

RECEIVES CHANNEL ASSIGNMENT — 120

PAGING CHANNEL

TRAFFIC CHANNEL — 124

RECEIVES LISTS OF AVAILABLE SERVICE PROVIDERS

TRANSMITS LIST OF ALL AVAILABLE SERVICE PROVIDERS — 122

CONTINUED AT FIG. 3B

CONTINUED AT FIG. 3B

FIG. 3A

CONTINUED
FROM STEP 124
OF FIG. 3A

CONTINUED
FROM STEP 122
OF FIG. 3A

SELECTS MOST
PREFERRED
SERVICE
PROVIDER                    128

STARTS TIMER                126

IF TIMER ELAPSES,
END CONNECTION
SETUP                       134

TRANSMITS MOST
PREFERRED
SERVICE
PROVIDER                    130

TRAFFIC
CHANNEL

RECEIVES MOST
PREFERRED SP AND
CONTINUES TO SETUP
THE CONNECTION              132

# FIG. 3B

FIG. 4

FIG. 5

FIG. 6

FIG. 7

SUBSCRIBER
UNIT

512

514

510

GATEWAY GROUND
STATION

EMERGENCY
NUMBERS
AND
EMERGENCY
SERVICES
LOCATIONS

SUBSCRIBER
UNIT
LOCATION
DETERM.
UNIT

520

524

PARSING
TABLES

TELEPHONE #
RECEPTION
UNIT

522

525

LOCATION-BASED
PARSING UNIT

526

SERVICE PROVIDER 1

516

SERVICE PROVIDER 2

SERVICE PROVIDER 3

SERVICE PROVIDER N

516

EP 0 995 323 B1

| COUNTRY OR OTHER ENTITY | RANGE OF LOCATIONS | PARSING SCHEME |
|---|---|---|
| | | |
| | | |
| . | | |
| . | | |
| . | | |

522

## FIG. 8

| EMERGENCY NUMBER | LOCATIONS OF CORRESPONDING EMERGENCY SERVICES CENTERS |
|---|---|
| | LOCATION #1--DIRECT NUMBER |
| | LOCATION #2--DIRECT NUMBER |
| | . . . |
| EMERGENCY NUMBER | LOCATIONS OF CORRESPONDING EMERGENCY SERVICES CENTERS |
| | LOCATION #1--DIRECT NUMBER |
| | LOCATION #2--DIRECT NUMBER |
| | . . . |
| . . . | |

520

## FIG. 9

FIG. 10

FIG. 11

SUBSCRIBER UNIT

712

714

716

SERVICE PROVIDER 1

SERVICE PROVIDER 2

SERVICE PROVIDER 3

SERVICE PROVIDER N

716

710

GATEWAY GROUND STATION

LAWFUL INTERCEPT JURISDICTION LOCATIONS TABLE

720

SUBSCRIBER UNIT LOCATION DETERM. UNIT

724

LAWFUL INTERCEPT REQUESTS TABLE

722

LAWFUL INTERCEPT VERIFICATION UNIT

726

EP 0 995 323 B1

| SUBSCRIBER UNIT | REQUESTING AGENCY | TYPE OF INTERCEPT |
|---|---|---|
| | | |
| | | |
| . . . | | |

FIG. 12

722

| LAW ENFORCEMENT AGENCY | RANGE OF JURISDICTION |
|---|---|
| | |
| | |
| . . . | |

720

FIG. 13

VIRTUAL CELL SET FOR SERVICE PROVIDER E

VIRTUAL CELL SET FOR SERVICE PROVIDER D

VIRTUAL CELL SET FOR SERVICE PROVIDER C

VIRTUAL CELL SET FOR SERVICE PROVIDER B

VIRTUAL CELL SET FOR SERVICE PROVIDER A

INFORMATION CELL SET

SERVICE AREA

820

818

816

814

812

802

800

804

CELL NO.1455

FIG. 14

SERVICE PROVIDER
DATA STRUCTURE

806

| INFORMATION CELL NO. | PERMISSIBLE SERVICE PROVIDERS |
|---|---|
| 1 | A, B, AND E |
| 2 | B AND E |
| 3 | A AND C |
| | · · · |
| N | D |

## FIG. 15A

EMERGENCY
SERVICES
DATA STRUCTURE

808

| INFORMATION CELL NO. | NEAREST EMERGENCY SERVICE PROVIDER |
|---|---|
| 1 | HOSPITAL A, POLICE DEPT. A, FIRE DEPT. B |
| 2 | HOSPITAL A, POLICE DEPT. C, FIRE DEPT. A |
| 3 | HOSPITAL A, POLICE DEPT. A, FIRE DEPT. C |
| | · · · |
| N | HOSPITAL D, POLICE DEPT. D, FIRE DEPT. F |

## FIG. 15B

JURISDICTION
DATA STRUCTURE

810

| INFORMATION CELL NO. | LAW ENFORCEMENT AGENCIES HAVING JURISDICTION WITHIN CELL AREA |
|---|---|
| 1 | FEDERAL, STATE AND LOCAL POLICE FOR COUNTRY A |
| 2 | FEDERAL POLICE FOR COUNTRY B |
| . . . | . . . |
| N | STATE AND LOCAL POLICE FOR COUNTRY A |

## FIG. 15C

SERVICE PROVIDER
PREFERENCES
DATA STRUCTURE
FOR SERVICE
PROVIDER X

810

| INFORMATION CELL NO. | VIRTUAL CELL NO. | SERVICE PROVIDER PREFERENCES |
|---|---|---|
| 1 | 52 | ENCRYPT USING ENCRYPTION CODE A; ROUTE EMERGENCY CALLS TO 911 |
| 2 | 49 | ENCRYPT USING ENCRYPTION CODE A; ROUTE EMERGENCY CALLS TO 999 |
| | | . . . |
| N | M | NO ENCRYPTION; ROUTE EMERGENCY CALLS TO APPROPRIATE DIRECT NUMBER |

## FIG. 15D

OPERATIONS PERFORMED BY GATEWAY BASE STATION TO PROCESS CALLS USING MULTIPLE SERVICE PROVIDER LOCATION MAPPING SCHEMES

RECEIVE TELEPHONE CALL CONNECTION REQUEST FROM A SUBSCRIBER UNIT — 902

DETERMINE LOCATION OF SUBSCRIBER UNIT — 904

IDENTIFY INFORMATION CELL CORRESPONDING TO THE LOCATION OF THE SUBSCRIBER UNIT USING INFORMATION CELL MAPPING SCHEME — 906

DETERMINE SERVICE PROVIDER FROM INFORMATION CELL AND USER PREFERENCES, IF ANY — 908

IF EMERGENCY CALL, DETERMINE NEAREST EMERGENCY SERVICE CENTER FROM INFORMATION CELL — 910

IF CALL IS SUBJECT TO LAWFUL INTERCEPT, DETERMINE WHETHER REQUESTING LAW ENFORCEMENT AGENCY HAS JURISDICTION FROM INFORMATION CELL — 912

IDENTIFY VIRTUAL SERVICE PROVIDER CELL CORRESPONDING TO THE LOCATION OF SUBSCRIBER UNIT USING MAPPING SCHEME FOR SELECTED SERVICE PROVIDER — 914

IDENTIFY ANY SPECIFIC CALL HANDLING REQUIREMENTS INCLUDING ANY UNIQUE LOCATION IDENTIFICATION REQUIREMENTS, EMERGENCY CALL HANDLING REQUIREMENTS OR ENCRYPTION REQUIREMENTS FROM VIRTUAL SERVICE PROVIDER CELL — 916

IF EMERGENCY CALL, ROUTE TO NEAREST EMERGENCY SERVICES CENTER VIA SELECTED SERVICE PROVIDER SUBJECT TO SERVICE PROVIDER REQUIREMENTS AND USING ANY UNIQUE SERVICE PROVIDER LOCATION IDENTIFICATION CODE, IF ANY — 918

IF NON-EMERGENCY CALL, ROUTE CALL TO SELECTED SERVICE PROVIDER SUBJECT TO SERVICE PROVIDER REQUIREMENTS AND USING ANY UNIQUE SERVICE PROVIDER LOCATION IDENTIFICATION CODE, IF ANY — 920

IF CALL IS SUBJECT TO LAWFUL INTERCEPT AND THE REQUESTING LAW ENFORCEMENT AGENCY HAS JURISDICTION, BEGIN INTERCEPTING CALL — 922

FIG. 16

SUBSCRIBER
UNIT

1012

1014

1010

GATEWAY GROUND
STATION

822

JURISDICTION
DATA
STRUCTURE

810

SERVICE
PROVIDER
PREFERENCES
DATA
STRUCTURES

EMERGENCY
SERVICES
DATA
STRUCTURE

808

SUBSCRIBER
UNIT
LOCATION
DETERM.
UNIT

524

SERVICE
PROVIDER
DATA
STRUCTURE

822

TELEPHONE #
RECEPTION
UNIT

525

MAPPING AND
CONTROL UNIT

1026

1016

SERVICE PROVIDER 1

SERVICE PROVIDER 2

SERVICE PROVIDER 3

SERVICE PROVIDER N

1016

FIG. 17

EP 0 995 323 B1

**POSITION ENCODING VIEW**

SERVICE AREA
LOCATION AREA CODE
CELL GROUP
VIRTUAL CELL

LAYER FOR SP A
1100
1104
1102
1106

LAYER FOR SP B
1106

LAYER FOR SP N
1106

**INFORMATION STORAGE VIEW**

1110
1112
1108

SERVICE AREA
SERVICE REGION
INFORMATION CELL

## FIG. 18

1102

CELL GROUP WIDTH
CELL GROUP

CELL GROUP HEIGHT

x = POSITION

CELL #=f(xOFFSET, yOFFSET, WIDTH, HEIGHT)

x

y OFFSET

24
12
0 | 1 | 2 | 3 | 4 | 5

x OFFSET

VIRTUAL CELL

1100

REFERENCE POINT

## FIG. 21

FIG. 19

FIG. 20

SR ID LIST

IC RECORD
LIST

CELL GROUP
ID LIST

☒ SP A

☐ SP A,B

▨ SP A,C

▧ SP A,C,D

## FIG. 22

1112

SERVICE
AREA

HAS A HANDLE TO

1110

SERVICE
REGION

1104

LAC

INFORMATION
STORAGE
VIEW

POSITION
ENCODING
VIEW

1108

INFORMATION
CELL

1102

CELL
GROUP

MAPPING
TABLE
ELEMENT

## FIG. 23

FIG. 24